# EUROPEAN PATENT APPLICATION

(11) **EP 4 661 102 A1**
(43) Date of publication of application: **10.12.2025**
(21) Application number: 23933426.1
(22) Date of filing: 19.04.2023
(51) Int. Cl.: H01M 4/505, H01M 4/525, H01M 10/052

(54) **COMPOSITE POSITIVE ELECTRODE MATERIAL AND PREPARATION METHOD THEREFOR, POSITIVE ELECTRODE SHEET, SECONDARY BATTERY AND ELECTRICAL APPARATUS**

(71) Applicant: Contemporary Amperex Technology Co., Limited, Ningde, Fujian 352100 (CN)
(72) Inventor: SHEN, Chongheng, Ningde, Fujian 352100 (CN); HUAN, Shuxing, Ningde, Fujian 352100 (CN); CHEN, Qiang, Ningde, Fujian 352100 (CN); WU, Changxu, Ningde, Fujian 352100 (CN); LIU, Na, Ningde, Fujian 352100 (CN)
(74) Representative: Gong, Jinping
(86) International application number: PCT/CN2023/089326
(87) International publication number: WO 2024/216549

(57) **Abstract**

This application provides a composite positive electrode material and a preparation method therefor, a positive electrode plate, a secondary battery, and an electric device. The composite positive electrode material includes a positive electrode material substrate and a first coating layer at least partially covering the positive electrode material substrate, where a general formula of the positive electrode material substrate is:
Li_{b}NiₓCo_{y}Mn_{z}MₐO_{2-c}, where M includes one or more of Zr, Y, Al, Ti, W, Sr, Ta, Mo, Sb, Nb, Na, K, and Ca, 0.55≤x≤1.0, 0≤y≤0.45, 0≤z≤0.45, 0≤a≤0.45, 0.5≤b≤1.2, a+x+y+z+b=2, and -0.1≤c≤0.1; and the first coating layer includes a transition metal element.

## Description

### TECHNICAL FIELD

This application relates to the field of secondary battery technologies, and in particular, to a composite positive electrode material and a preparation method therefor, a positive electrode plate, a secondary battery, and an electric device.

### BACKGROUND

In recent years, secondary batteries have been widely used in energy storage power systems such as hydraulic, thermal, wind and solar power plants, as well as in many fields such as electric tools, electric bicycles, electric motorcycles, electric vehicles, military equipment, and aerospace.

Performance of a positive electrode active material exerts key impact on performance of a secondary battery. At present, the positive electrode active material has many defects and fails to meet needs of application of new-generation electrochemical systems.

### SUMMARY

To resolve the foregoing problems, this application is made and aims to provide a composite positive electrode material. The composite positive electrode material can reduce direct current internal resistance of a battery, increase a gram capacity and first coulombic efficiency of the battery, improve high-temperature storage performance and high-temperature cycle performance of the battery, reduce high-temperature gas production of the battery, and comprehensively improve electrochemical performance of the battery.

To achieve the foregoing objective, according to a first aspect of this application, a composite positive electrode material is provided. The composite positive electrode material includes a positive electrode material substrate and a first coating layer at least partially covering the positive electrode material substrate, where a general formula of the positive electrode material substrate is:

Li_{b}NiₓCo_{y}Mn_{z}MₐO_{2-c},

where M includes one or more of Zr, Y, Al, Ti, W, Sr, Ta, Mo, Sb, Nb, Na, K, and Ca, 0.55≤x≤1.0, 0≤y≤0.45, 0≤z≤0.45, 0≤a≤0.45, 0.5≤b≤1.2, a+x+y+z+b=2, and -0.1≤c≤0.1; and
the first coating layer includes a transition metal element.

The transition metal element in the first coating layer activates a lithiated rock salt structure on a surface of the positive electrode material substrate, so that lithium in the lithiated rock salt structure is more active, thereby improving the first coulombic efficiency and the gram capacity of the battery. The transition metal element in the first coating layer reacts with residual lithium on the surface of the positive electrode material substrate to generate a transition metal element-containing lithium salt material having high ionic conductivity, thereby increasing a transfer rate of lithium ions on a surface of the material, reducing the direct current internal resistance of the battery, and improving kinetic performance of the battery. The transition metal element in the first coating layer easily forms a dense coating layer on the surface of the positive electrode material substrate, which can reduce a possibility that active sites of the material are corroded by a byproduct of an electrolytic solution, thereby improving high-temperature cycling and high-temperature storage, and reducing high-temperature gas production.

In any embodiment, in the general formula Li_{b}NiₓCo_{y}Mn_{z}MₐO_{2-c}, 0.9≤x≤1.0, 0≤y≤0.1, 0≤z≤0.1, 0≤a≤0.1, 0.5≤b≤1.2, a+x+y+z+b=2, and -0.1≤c≤0.1.

That the positive electrode material substrate satisfies the foregoing general formula enables a battery to have a high gram capacity, thereby satisfying needs of a novel battery.

In any embodiment, the transition metal element is present in the first coating layer in a form of an oxide or a fluoride.

The transition metal element is present in a form of an oxide or a flouride, which is conducive to reaction with the participating lithium on the surface of the material to generate a transition metal element-containing lithium salt material having high ionic conductivity, thereby increasing a transfer rate of lithium ions on a surface of the material, and reducing the direct current internal resistance of the battery. In addition, a coating layer formed by an oxide or a flouride of the transition metal element on the surface of the material is denser, thereby improving the high-temperature storage performance and the high-temperature cycle performance of the battery.

In any embodiment, the transition metal element includes one or more of Co, Ce, Zr, La, Sb, and W, and optionally, the transition metal element includes one or both of Co and Ce.

In any embodiment, the first coating layer further includes a compound having a melting point lower than 900°C.

The compound having a melting point lower than 900°C can be used as a flux, to cause the compound and the transition metal element to have a low eutectic point, which can improve coating and melting effects of the transition metal element. Therefore, the transition metal element is solid-fused into surface lattices of the positive electrode material substrate, thereby further increasing the gram capacity of the battery, reducing the direct current internal resistance of the battery, improving the high-temperature storage performance and the high-temperature cycle performance of the battery, and reducing high-temperature gas production of the battery.

In any embodiment, the compound having a melting point lower than 900°C includes an alkali metal element and a non-metal element, where the non-metal element includes one or more of N, F, Cl, and S.

In any embodiment, the composite positive electrode material further includes a second coating layer, where the second coating layer at least partially covers the surface of the first coating layer, and the second coating layer includes one or more of Al, B, and W.

Al, B, and W included in the second coating layer may form a glassy material, such as LiAlO₂, Li₃BO₃, or Li₂WO₄, with the positive electrode material substrate. The glassy material is wrapped at grain boundaries of particles, which can suppress generation of oxygen defects, improve the high-temperature storage performance and the high-temperature cycle performance of the battery, and reduce high-temperature gas production of the battery. In addition, the glassy material has excellent ion conductivity, which can increase a transfer rate of lithium ions on the surface of the material, and reduce the direct current internal resistance of the battery.

In any embodiment, based on a mass of the positive electrode material substrate, a mass content of the transition metal element in the first coating layer ranges from 100 ppm to 20000 ppm, and optionally, ranges from 1000 ppm to 15000 ppm.

That the mass content of the transition metal element falls within a proper range causes the transition metal element to be uniformly and closely wrapped on the positive electrode material substrate, thereby effectively improving structural performance of the material. In addition, a possibility of island accumulation due to excessive coating can be reduced, and reduces impact of the island accumulation on the performance of the material can be reduced, so that the battery has low direct current internal resistance. The battery has an excellent gram capacity, excellent first coulombic efficiency, excellent high-temperature storage performance, and excellent high-temperature cycle performance, so that the battery has a small high-temperature gas production amount.

In any embodiment, a molar ratio M of Ce to Co in the transition metal element meets 0<M≤10, and optionally, meets 0<M≤1.

The molar ratio M of Ce to Co in the transition metal element falls within a proper range. The battery has low direct current internal resistance. The battery has an excellent gram capacity, excellent first coulombic efficiency, excellent high-temperature storage performance, and excellent high-temperature cycle performance. The battery has a small high-temperature gas production amount.

In any embodiment, based on the mass of the positive electrode material substrate, a mass content of the alkali metal element in the first coating layer ranges from 100 ppm to 15000 ppm, and optionally, ranges from 1000 ppm to 8000 ppm.

That the mass content of the alkali metal element in the first coating layer falls within a proper range causes the alkali metal element to be uniformly and closely wrapped on the positive electrode material substrate, thereby effectively lowering a eutectic point of the first coating layer, and improving coating and melting effects of the transition metal element. In addition, a possibility of island accumulation due to excessive coating can be reduced, and impact of the island accumulation on the performance of the material can be reduced, so that the battery has low direct current internal resistance. The battery has an excellent gram capacity, excellent first coulombic efficiency, excellent high-temperature storage performance, and excellent high-temperature cycle performance, so that the battery has a small high-temperature gas production amount.

In any embodiment, based on the mass of the positive electrode material substrate, a mass content of the non-metal element in the first coating layer ranges from 200 ppm to 50000 ppm, and optionally, ranges from 500 ppm to 8000 ppm.

That the mass content of the non-metal element in the first coating layer falls within a proper range causes the non-metal element to be uniformly and closely wrapped on the positive electrode material substrate, thereby effectively lowering a eutectic point of the first coating layer, and improving coating and melting effects of the transition metal element. In addition, a possibility of island accumulation due to excessive coating can be reduced, and impact of the island accumulation on the performance of the material can be reduced, so that the battery has low direct current internal resistance. The battery has an excellent gram capacity, excellent first coulombic efficiency, excellent high-temperature storage performance, and excellent high-temperature cycle performance, so that the battery has a small high-temperature gas production amount.

In any embodiment, based on the mass of the positive electrode material substrate, a mass content of Al in the second coating layer ranges from 100 ppm to 3500 ppm, and optionally, ranges from 500 ppm to 2500 ppm.

That the mass content of Al in the first coating layer falls within a proper range causes Al to be uniformly and closely wrapped on the positive electrode material substrate, to form sufficient LiAlO₂, thereby effectively inhibiting generation of oxygen defects and reducing a possibility of a side reaction between an electrolytic solution and a material at a high temperature. In addition, a possibility of island accumulation due to excessive coating can be reduced, and impact of the island accumulation on the performance of the material can be reduced, so that the battery has low direct current internal resistance. The battery has an excellent gram capacity, excellent first coulombic efficiency, excellent high-temperature storage performance, and excellent high-temperature cycle performance, so that the battery has a small high-temperature gas production amount.

In any embodiment, based on the mass of the positive electrode material substrate, a mass content of B in the second coating layer ranges from 100 ppm to 2500 ppm, and optionally, ranges from 500 ppm to 2000 ppm.

That the mass content of the B in the first coating layer falls within a proper range causes the B to be uniformly and closely wrapped on the positive electrode material substrate, to form sufficient Li₃BO₃, thereby effectively inhibiting generation of oxygen defects. In addition, a possibility of island accumulation due to excessive coating can be reduced, which reduces impact of the island accumulation on the performance of the material, so that the battery has low direct current internal resistance. The battery has an excellent gram capacity, excellent first coulombic efficiency, excellent high-temperature storage performance, and excellent high-temperature cycle performance, so that the battery has a small high-temperature gas production amount.

In any embodiment, a mass ratio of the element Al to the element B in the second coating layer ranges from 0.5 to 2.

The mass ratio of the element Al to the element B falls within a proper range. The battery has low direct current internal resistance. The battery has an excellent gram capacity, excellent first coulombic efficiency, excellent high-temperature storage performance, and excellent high-temperature cycle performance. The battery has a small high-temperature gas production amount.

In any embodiment, a total thickness of the first coating layer and the second coating layer ranges from 0.01 µm to 1 µm.

That the total thickness of the first coating layer and the second coating layer falls within a proper range causes an effective protective layer to be formed on the positive electrode material substrate while facilitating rapid transfer of lithium ions on the surface of the material and improving ion conductivity of the material, so that the battery has low direct current internal resistance, and the battery has an excellent gram capacity, excellent first coulombic efficiency, excellent high-temperature storage performance, and excellent high-temperature cycle performance, and the battery has a small high-temperature gas production amount.

In any embodiment, an aspect ratio of primary particles of the composite positive electrode material ranges from 1.5 to 10, and optionally, ranges from 2 to 4.

That the aspect ratio of the primary particles of the composite positive electrode material falls within a proper range shortens a migration distance of lithium ions, improves de-intercalation kinetics of lithium ions, and reduces direct current internal resistance of the battery. In addition, the primary particles have a proper aspect ratio, small stress, and high particle strength During cyclic charging and discharging, as lithium ions repeatedly de-intercalate from and intercalate into the primary particles, the primary particles can still maintain a complete structure, which basically prevents transition metal inside the primary particles from escaping from the primary particles and being dissolved into the electrolytic solution, thereby improving cycle stability of the battery, and improving the high-temperature storage performance and the high-temperature cycle performance of the battery.

In any embodiment, a span of the composite positive electrode material is greater than or equal to 0.5, and optionally, is greater than or equal to 1.2.

That the span of the composite positive electrode material falls within a proper range can increase a compaction density of an electrode plate and increase the gram capacity of the battery.

In any embodiment, an oxygen defect index (ODI) of the composite positive electrode material is greater than or equal to 1.75, and optionally, is greater than or equal to 1.8.

The ODI of the composite positive electrode material falls within a proper range. The battery has low direct current internal resistance. The battery has an excellent gram capacity, excellent first coulombic efficiency, excellent high-temperature storage performance, and excellent high-temperature cycle performance. The battery has a small high-temperature gas production amount.

According to a second aspect of this application, a preparation method for a composite positive electrode material is provided, including step (1) and step (2):
Step (1): Uniformly mix a first raw material including a lithium source and a positive electrode material precursor, and perform a first calcination in a first atmosphere to obtain a first product, where optionally, the first raw material further includes an M source.
Step (2): Mix the first product and a second raw material including a transition metal element source in a second atmosphere to perform a second calcination, to prepare the composite positive electrode material, where
the composite positive electrode material includes a positive electrode material substrate and a first coating layer arranged on at least a part of the positive electrode material substrate, where a general formula of the positive electrode material substrate is:

   Li_{b}NiₓCo_{y}Mn_{z}MₐO_{2-c},
where M includes one or more of Zr, Y, Al, Ti, W, Sr, Ta, Mo, Sb, Nb, Na, K, and Ca, 0.55≤x≤1.0, 0≤y≤0.45, 0≤z≤0.45, 0≤a≤0.45, 0.5≤b≤1.2, a+x+y+z+b=2, and -0.1≤c≤0.1; and
the first coating layer includes a transition metal element.

Through the foregoing preparation method, a transition metal element layer is coated on the positive electrode material substrate. The transition metal element in the first coating layer activates a lithiated rock salt structure on a surface of the positive electrode material substrate, so that lithium in the lithiated rock salt structure is more active, thereby improving the first coulombic efficiency and the gram capacity of the battery. The transition metal element in the first coating layer reacts with residual lithium on the surface of the positive electrode material substrate to generate a transition metal element-containing lithium salt material having high ionic conductivity, thereby increasing a transfer rate of lithium ions on a surface of the material, reducing the direct current internal resistance of the battery. The transition metal element in the first coating layer easily forms a dense coating layer on the surface of the positive electrode material substrate, which can reduce a possibility that active sites of the material are corroded by a byproduct of an electrolytic solution, thereby improving high-temperature cycling and high-temperature storage, and reducing high-temperature gas production.

In any embodiment, the transition metal element includes one or more of Ce, Co, Zr, La, Sb, and W.

In any embodiment, the second raw material further includes a compound having a melting point lower than 800°C.

Adding a compound having a melting point lower than 900°C to the second raw material causes the first coating layer to further include the melting point lower than 900°C, to cause the compound and the transition metal element to have a low eutectic point, which can improve coating and melting effects of the transition metal element. Therefore, the transition metal element is solid-fused into surface lattices of the positive electrode material substrate, thereby further increasing the gram capacity of the battery, reducing the direct current internal resistance of the battery, improving the high-temperature storage performance and the high-temperature cycle performance of the battery, and reducing high-temperature gas production of the battery.

In any embodiment, step (2) specifically includes:
mixing the first product and the second raw material in the second atmosphere uniformly, and performing the second calcination, to obtain a second product; and
mixing the second product and a third raw material uniformly, and performing a third calcination in a third atmosphere, to prepare the composite positive electrode material, where the third raw material includes one or more of an Al source, a B source, and a W source.

Through the third calcination, a second coating layer is formed on a surface of the first coating layer. Al, B, and W included in the second coating layer may form a glassy material, such as LiAlO₂, Li₃BO₃, or Li₂WO₄, with the positive electrode material substrate. The glassy material is wrapped at grain boundaries of particles, which can suppress generation of oxygen defects, improve the high-temperature storage performance and the high-temperature cycle performance of the battery, and reduce high-temperature gas production of the battery. In addition, the glassy material has excellent ion conductivity, which can increase a transfer rate of lithium ions on the surface of the material, and reduce the direct current internal resistance of the battery.

In any embodiment, the first atmosphere is an air atmosphere or a pure oxygen atmosphere, a calcination temperature of the first calcination ranges from 700°C to 900°C, and a calcination time ranges from 10 h to 20 h.

In any embodiment, the second atmosphere is a pure oxygen atmosphere or an air atmosphere, a calcination temperature of the second calcination ranges from 300°C to 650°C, and a calcination time ranges from 3 h to 10 h.

In any embodiment, the third atmosphere is an air atmosphere or a pure oxygen atmosphere, a calcination temperature of the third calcination ranges from 200°C to 500°C, and a calcination time ranges from 5 h to 15 h.

According to third aspect of this application, a positive electrode plate is provided. The positive electrode plate includes the composite positive electrode material according to the first aspect or the composite positive electrode material prepared by using the preparation method according to the second aspect.

According to a fourth aspect of this application, a secondary battery is provided, including the positive electrode plate according to the third aspect.

According to a fifth aspect of this application, an electric device is provided, including the secondary battery according to the fourth aspect.

### BRIEF DESCRIPTION OF THE DRAWINGS

FIG. 1 is a schematic diagram of a secondary battery according to an embodiment of this application;
FIG. 2 is an exploded view of the secondary battery shown in FIG. 1 according to an embodiment of this application;
FIG. 3 is a schematic diagram of a battery module according to an embodiment of this application;
FIG. 4 is a schematic diagram of a battery pack according to an embodiment of this application;
FIG. 5 is an exploded view of the battery pack shown in FIG. 4 according to an embodiment of this application; and
FIG. 6 is a schematic diagram of an electric device using a secondary battery as a power supply according to an embodiment of this application.

### Description of reference signs:

1. battery pack; 2. upper box body; 3. lower box body; 4. battery module; 5. secondary battery; 51. case; 52. electrode assembly; 53. cover plate.

### DETAILED DESCRIPTION

The following specifically discloses embodiments of a composite positive electrode active material and a preparation method therefor, a secondary battery, and an electric device in this application, with proper reference to accompanying drawings. However, there may be situations where unnecessary detailed explanations may be omitted. For example, there are situations where detailed explanations of well-known matters are omitted and repeated explanations of the same structure are actually provided. This is to avoid unnecessary redundancy in the subsequent descriptions and to facilitate understanding by a person skilled in the art. In addition, the accompanying drawings and the following description are provided for a person skilled in the art to fully understand this application and are not intended to limit the subject matter recorded in the claims.

The "ranges" disclosed in this application are defined in the form of lower and upper limits, with a given range being defined by the selection of a lower limit and an upper limit defining the boundaries of the particular range. A range defined in this manner may be inclusive or exclusive of end values, and may be arbitrarily combined, that is, any lower limit may be combined with any upper limit to form a range. For example, if ranges of 60 to 120 and 80 to 110 are listed for a particular parameter, it is to be understood that ranges of 60 to 110 and 80 to 120 are also expected. Additionally, if the minimum range values 1 and 2 and the maximum range values 3, 4 and 5 are listed, the following ranges are all contemplated: 1 to 3, 1 to 4, 1 to 5, 2 to 3, 2 to 4 and 2 to 5. In this application, unless otherwise specified, the value range "a to b" represents an abbreviated representation of any combination of real numbers between a and b, where a and b are both real numbers. For example, a range of 0 to 5 means that all real numbers between 0 and 5 have been listed herein, and 0 to 5 is merely an abbreviated representation of combinations of these values. In addition, when a parameter is expressed as an integer of >2, it is equivalent to disclosing that the parameter is, for example, an integer of 2, 3, 4, 5, 6, 7, 8, 9, 10, 11, 12, and the like.

If there is no special explanation, all implementation methods and optional implementation methods of this application can be combined to form new technical solutions.

Unless otherwise specified, all technical features and optional technical features of this application can be combined to form new technical solutions.

Unless otherwise specified, all the steps in this application can be performed in the order described or in a random order, and preferably in the order described. For example, the phrase "the method includes step (a) and step (b)" indicates that the method may include step (a) and step (b) performed sequentially, or the method may include step (b) and step (a) performed sequentially. For example, reference to "the method may further include step (c)" indicates that step (c) may be added to the method in any order, for example, the method may include steps (a), (b), and (c), or may include steps (a), (c), and (b), or may include steps (c), (a), and (b), and the like.

Unless otherwise specified, the terms "comprise" and "include" mentioned in this application indicate open or closed. For example, "comprise" and "include" may mean that other components not listed may or may not further be included or included.

Unless otherwise specified, a term "or" is inclusive in this application. For example, the phrase "A or B" means "A, B, or both A and B. More specifically, the condition "A or B" is satisfied by any one of the following conditions: A is true (or present) and B is false (or absent); A is false (or absent) and B is true (or present); or both A and B are true (or present).

A ternary material has advantages of a high energy density and good cycle performance and receives widespread attention. However, during actual production, researchers find that the existing ternary materials have poor conductivity and increased direct current internal resistance during cycling, resulting in deterioration of rate performance. In addition, during charging and discharging, the ternary materials are extremely vulnerable to being corroded by an electrolytic solution, resulting in structural collapse and impact on cycle performance of a battery. Therefore, there is a need to develop a positive electrode material that can reduce direct current internal resistance of a battery and improve cycle performance of the battery, to meet needs of application of new-generation electrochemical systems.

### [Composite positive electrode material]

According to a first aspect of this application, a composite positive electrode material is provided. The composite positive electrode material includes a positive electrode material substrate and a first coating layer at least partially covering the positive electrode material substrate, where a general formula of the positive electrode material substrate is:

Li_{b}NiₓCo_{y}Mn_{z}MₐO_{2-c},

where M includes one or more of Zr, Y, Al, Ti, W, Sr, Ta, Mo, Sb, Nb, Na, K, and Ca, 0.55≤x≤1.0, 0≤y≤0.45, 0≤z≤0.45, 0≤a≤0.45, 0.5≤b≤1.2, a+x+y+z+b=2, and -0.1≤c≤0.1; and
the first coating layer includes a transition metal element.

In this specification, the term "transition metal element" refers to elements in Groups IIB to VIIB, VIII and elements in Groups IB to IIB of the Periodic Table of Elements.

In some embodiments, x is any value of 0.55, 0.6, 0.7, 0.8, 0.85, 0.9, 0.93, 0.94, 0.95, and 1 or a range including any two of the values.

In some embodiments, y is any value of 0, 0.01, 0.02, 0.03, 0.04, 0.05, 0.06, 0.07, 0.1, 0.15, 0.2, 0.3, 0.4, and 0.45, or a range including any two of the values.

In some embodiments, z is any value of 0, 0.01, 0.02, 0.03, 0.04, 0.05, 0.06, 0.07, 0.1, 0.15, 0.2, 0.3, 0.4, and 0.45, or a range including any two of the values.

In some embodiments, a is any value of 0, 0.01, 0.02, 0.03, 0.04, 0.05, 0.06, 0.07, 0.1, 0.15, 0.2, 0.3, 0.4, and 0.45, or a range including any two of the values.

In some embodiments, b is any value of 0.5, 0.6, 0.7, 0.8, 0.85, 0.9, 0.95, 1, 1.1, and 1.2 or a range including any two of the values.

In some embodiments, c is any value of -0.1, 0, and 0.1 or a range a range including any two of the values.

In some embodiments, the positive electrode material substrate does not include an M element.

In some embodiments, the positive electrode material substrate includes an M element.

In some embodiments, the M element includes Sb or Zr.

That the positive electrode material substrate includes the M element improves a voltage plateau of the material, improves ionic conductivity and electronic conductivity of the material, reduces direct current internal resistance of the battery, reduces polarization of the battery, improves first coulombic efficiency, high-temperature cycle performance, and high-temperature storage performance, and reduces high-temperature gas production of the battery.

The transition metal element in the first coating layer activates a lithiated rock salt structure on a surface of the positive electrode material substrate, so that lithium in the lithiated rock salt structure is more active, thereby improving the first coulombic efficiency and the gram capacity of the battery. The transition metal element in the first coating layer reacts with residual lithium on the surface of the positive electrode material substrate to generate a transition metal element-containing lithium salt material having high ionic conductivity, thereby increasing a transfer rate of lithium ions on a surface of the material, reducing the direct current internal resistance of the battery. The transition metal element in the first coating layer easily forms a dense coating layer on the surface of the positive electrode material substrate, which can reduce a possibility that active sites of the material are corroded by a byproduct of an electrolytic solution, thereby improving high-temperature cycling and high-temperature storage, and reducing high-temperature gas production.

In conclusion, coating a transition metal element layer on a positive electrode material substrate can reduce direct current internal resistance of a battery, increase a gram capacity and first coulombic efficiency of the battery, improve high-temperature storage performance and high-temperature cycle performance of the battery, reduce high-temperature gas production of the battery, and comprehensively improve electrochemical performance of the battery.

In some embodiments, in the general formula Li_{b}NiₓCo_{y}Mn_{z}MₐO_{2-c}, 0.9≤x≤1.0, 0≤y≤0.1, 0≤z≤0.1, 0≤a≤0.1, 0.5≤b≤1.2, a+x+y+z+b=2, and -0.1≤c≤0.1.

In some embodiments, x is any value of 0.9, 0.92, 0.93, 0.94, 0.95, and 1 or a range including any two of the values.

In some embodiments, y is any value of 0, 0.01, 0.02, 0.03, 0.04, 0.05, 0.06, 0.07, and 0.1 or a range including any two of the values.

In some embodiments, z is any value of 0, 0.01, 0.02, 0.03, 0.04, 0.05, 0.06, 0.07, and 0.1 or a range including any two of the values.

In some embodiments, a is any value of 0, 0.01, 0.02, 0.03, 0.04, 0.05, 0.06, 0.07, and 0.1 or a range including any two of the values.

In some embodiments, b is any value of 0.5, 0.6, 0.7, 0.8, 0.85, 0.9, 0.95, 1, 1.1, and 1.2 or a range including any two of the values.

In some embodiments, c is any value of -0.1, 0, and 0.1 or a range a range including any two of the values.

That the positive electrode material substrate satisfies the foregoing general formula enables a battery to have a high gram capacity, thereby satisfying needs of a novel battery.

In some embodiments, the transition metal element is present in the first coating layer in a form of an oxide or a fluoride.

A form in which the transition metal element is present may be measured by using a method known in the art. For example, the form in which the transition metal element is present is determined by an inductively coupled plasma spectrometer ICP (for example, a Spectroblue model) and an XRD diffractometer.

The transition metal element is present in a form of an oxide or a flouride, which is conducive to reaction with the participating lithium on the surface of the material to generate a transition metal element-containing lithium salt material having high ionic conductivity, thereby increasing a transfer rate of lithium ions on a surface of the material, and reducing the direct current internal resistance of the battery. In addition, a coating layer formed by an oxide or a flouride of the transition metal element on the surface of the material is denser, thereby improving the high-temperature storage performance and the high-temperature cycle performance of the battery.

In some embodiments, the transition metal element includes one or more of Co, Ce, Zr, La, Sb, and W.

In some embodiments, the transition metal element includes Co or Ce.

In some embodiments, the transition metal element includes Co and Ce.

In some embodiments, Co is present in the first coating layer in a form of Co₃O₄.

In some embodiments, Ce is present in the first coating layer in a form of CeO₂ or CeF₃.

In some embodiments, oxides or fluorides of Ce and Co react with residual lithium on the surface of the positive electrode material substrate to generate LiCeO₂ and LiCoO₂ having high ionic conductivity, thereby increasing a transfer rate of lithium ions on a surface of the material, reducing the direct current internal resistance of the battery, and improving kinetic performance of the battery.

In some embodiments, the first coating layer further includes a compound having a melting point lower than 900°C.

In this specification, the term "melting point" refers to a melting point of a material at one atmosphere of pressure.

In some embodiments, the melting point of the compound is less than any one of 500°C, 600°C, 700°C, 800°C, or 900°C.

In some embodiments, the compound having a melting point lower than 900°C includes one or more of lithium sulfate, sodium sulfate, potassium sulfate, lithium nitrate, sodium nitrate, potassium nitrate, lithium fluoride, sodium fluoride, potassium fluoride, lithium sulfide, sodium sulfide, potassium sulfide, lithium chloride, sodium chloride, potassium chloride, lithium oxalate, sodium oxalate, potassium oxalate, lithium acetate, sodium acetate, and potassium acetate.

The compound having a melting point lower than 900°C can be used as a flux, to cause the compound and the transition metal element to have a low eutectic point, which can improve coating and melting effects of the transition metal element. Therefore, the transition metal element is solid-fused into surface lattices of the positive electrode material substrate, thereby further increasing the gram capacity of the battery, reducing the direct current internal resistance of the battery, improving the high-temperature storage performance and the high-temperature cycle performance of the battery, and reducing high-temperature gas production of the battery.

In any embodiment, the compound having a melting point lower than 900°C includes an alkali metal element and a non-metal element, where the non-metal element includes one or more of N, F, Cl, and S.

In this specification, the term "alkali metal" refers to six metal elements in Group IA in the Periodic Table of Elements except hydrogen (H), that is, lithium (Li), sodium (Na), potassium (K), rubidium (Rb), cesium (Cs), and francium (Fr).

In some embodiments, the compound having a melting point lower than 900°C includes a lithium element.

The lithium element may be used as a lithium supplement, to increase the gram capacity of the material, and increase the energy density of the battery.

In some embodiments, the composite positive electrode material further includes a second coating layer, where the second coating layer at least partially covers the surface of the first coating layer, and the second coating layer includes one or more of Al, B, and W.

In some embodiments, the second coating layer includes one or both of Al and B.

Al, B, and W included in the second coating layer may form a glassy material, such as LiAlO₂, Li₃BO₃, or Li₂WO₄, with the positive electrode material substrate. The glassy material is wrapped at grain boundaries of particles, which can suppress generation of oxygen defects, improve the high-temperature storage performance and the high-temperature cycle performance of the battery, and reduce high-temperature gas production of the battery. In addition, the glassy material has excellent ion conductivity, which can increase a transfer rate of lithium ions on the surface of the material, and reduce the direct current internal resistance of the battery.

In some embodiments, based on a mass of the positive electrode material substrate, a mass content of the transition metal element in the first coating layer ranges from 100 ppm to 20000 ppm.

In some embodiments, based on a mass of the positive electrode material substrate, a mass content of the transition metal element in the first coating layer is any value of 100 ppm, 500 ppm, 1000 ppm, 1500 ppm, 2000 ppm, 3000 ppm, 4000 ppm, 5000 ppm, 6000 ppm, 7000 ppm, 8000 ppm, 9000 ppm, 10000 ppm, 11000 ppm, 12000 ppm, 13000 ppm, 15000 ppm, 16000 ppm, 17000 ppm, 18000 ppm, 19000 ppm, and 20000 ppm or a range including any two of the values.

The mass content of the transition metal element may be measured by using a method known in the art. For example, the measurement may be performed with reference to the standard EPA 6010D-2014. Specifically, the measurement may be performed by using elemental analysis-inductively coupled plasma emission spectrometry (ICP-OES). First, a to-be-measured sample is dissolved into a liquid with a strong acid, and subsequently, the liquid is introduced to an ICP light source through atomization. Further, after to-be-measured gaseous atoms are ionized and excited in a strong magnetic field, the to-be-measured gaseous atoms are restored from an excited state to a ground state. Energy is released in the foregoing process and recorded as different characteristic spectral lines for quantitative element analysis.

That the mass content of the transition metal element falls within a proper range causes the transition metal element to be uniformly and closely wrapped on the positive electrode material substrate, thereby effectively improving structural performance of the material. In addition, a possibility of island accumulation due to excessive coating can be reduced, which reduces impact of the island accumulation on the performance of the material, so that the battery has low direct current internal resistance. The battery has an excellent gram capacity, excellent first coulombic efficiency, excellent high-temperature storage performance, and excellent high-temperature cycle performance, so that the battery has a small high-temperature gas production amount.

In some embodiments, based on a mass of the positive electrode material substrate, a mass content of the transition metal element in the first coating layer ranges from 1000 ppm to 15000 ppm. In some embodiments, based on a mass of the positive electrode material substrate, a mass content of the transition metal element in the first coating layer is any value of 1000 ppm, 1500 ppm, 2000 ppm, 3000 ppm, 4000 ppm, 5000 ppm, 6000 ppm, 7000 ppm, 8000 ppm, 9000 ppm, 10000 ppm, 11000 ppm, 12000 ppm, 13000 ppm, and 15000 ppm or a range including any two of the values.

That the mass content of the transition metal element falls within a proper range leads to generation of a large amount of transition metal element-containing lithium salt material having high ionic conductivity, thereby increasing a transfer rate of lithium ions on the surface of the material and further reducing the direct current internal resistance of the battery. In addition, the transition metal element with a proper mass content further forms a dense coating layer on the surface of the positive electrode material substrate, thereby reducing a possibility that the material is corroded by a byproduct of an electrolytic solution, and improving the high-temperature cycle performance of the material.

In some embodiments, a molar ratio M of Ce to Co in the transition metal element meets 0<M≤10. In some embodiments, a molar ratio M of Ce to Co in the transition metal element meets any one of: 0<M≤1, 0<M≤2, 0<M≤3, 0<M≤4, 0<M≤5, 0<M≤6, 0<M≤7, 0<M≤8, 0<M≤9, and 0<M≤10.

Both molar contents of Ce and Co within proper ranges are conducive to improving structural performance of the material, thereby improving electrochemical performance of the battery. In addition, to prevent pushing and accumulation on the surface of the substrate material due to excessive molar contents of Ce and Co from hindering transfer of lithium ions, the molar contents of Ce and Co need to be controlled to be within proper ranges.

The molar ratio of Ce to Co in the transition metal element may be measured by using a method known in the art. For example, the measurement may be performed with reference to the standard EPA 6010D-2014. Specifically, the measurement may be performed by using ICP-OES. First, a to-be-measured sample is dissolved into a liquid with a strong acid, and subsequently, the liquid is introduced to an ICP light source through atomization. Further, after to-be-measured gaseous atoms are ionized and excited in a strong magnetic field, the to-be-measured gaseous atoms are restored from an excited state to a ground state. Energy is released in the foregoing process and recorded as different characteristic spectral lines for quantitative element analysis, to obtain mass contents of Ce and Co and obtain a molar ratio M of the two through calculation.

The molar ratio M of Ce to Co in the transition metal element falls within a proper range. The battery has low direct current internal resistance. The battery has an excellent gram capacity, excellent first coulombic efficiency, excellent high-temperature storage performance, and excellent high-temperature cycle performance. The battery has a small high-temperature gas production amount.

In some embodiments, a molar ratio M of Ce to Co in the transition metal element meets 0<M≤1. In some embodiments, a molar ratio M of Ce to Co in the transition metal element meets any one of: 0<M≤0.1, 0<M≤0.2, 0<M≤0.3, 0<M≤0.4, 0<M≤0.5, 0<M≤0.6, 0<M≤0.7, 0<M≤0.8, 0<M≤0.9, and 0<M≤1.

That the molar ratio M of Ce to Co in the transition metal element falls within a proper range can improve the high-temperature cycle performance and the high-temperature storage performance of the battery, reduce high-temperature gas production of the battery, and widen an operating temperature of the battery.

In some embodiments, based on the mass of the positive electrode material substrate, a mass content of the alkali metal element in the first coating layer ranges from 100 ppm to 15000 ppm. In some embodiments, based on the mass of the positive electrode material substrate, a mass content of the alkali metal element in the first coating layer is any value of 100 ppm, 500 ppm, 1000 ppm, 1500 ppm, 2000 ppm, 3000 ppm, 4000 ppm, 5000 ppm, 6000 ppm, 7000 ppm, 8000 ppm, 9000 ppm, 10000 ppm, 11000 ppm, 12000 ppm, 13000 ppm, and 15000 ppm or a range including any two of the values.

For the measurement of the mass content of the alkali metal element, reference is made to the measurement method for the transition metal element in the foregoing text.

That the mass content of the alkali metal element in the first coating layer falls within a proper range causes the alkali metal element to be uniformly and closely wrapped on the positive electrode material substrate, thereby effectively lowering a eutectic point of the first coating layer, and improving coating and melting effects of the transition metal element. In addition, a possibility of island accumulation due to excessive coating can be reduced, and impact of the island accumulation on the performance of the material can be reduced, so that the battery has low direct current internal resistance. The battery has an excellent gram capacity, excellent first coulombic efficiency, excellent high-temperature storage performance, and excellent high-temperature cycle performance, so that the battery has a small high-temperature gas production amount.

In some embodiments, based on the mass of the positive electrode material substrate, a mass content of the alkali metal element in the first coating layer ranges from 1000 ppm to 8000 ppm. In some embodiments, based on the mass of the positive electrode material substrate, a mass content of the alkali metal element in the first coating layer is any value of 1000 ppm, 1500 ppm, 2000 ppm, 3000 ppm, 4000 ppm, 5000 ppm, 6000 ppm, 7000 ppm, and 8000 ppm or a range including any two of the values.

That the mass content of the alkali metal in the first coating layer falls within a proper range can take all of the first coulombic efficiency, the high-temperature storage performance, the high-temperature storage performance, and the high-temperature gas production amount of the battery into account, to comprehensively improve the performance of the battery.

In some embodiments, based on the mass of the positive electrode material substrate, a mass content of the non-metal element in the first coating layer ranges from 200 ppm to 50000 ppm. In some embodiments, based on the mass of the positive electrode material substrate, a mass content of the non-metal element in the first coating layer is any value of 200 ppm, 500 ppm, 1000 ppm, 1500 ppm, 2000 ppm, 3000 ppm, 4000 ppm, 5000 ppm, 6000 ppm, 7000 ppm, 8000 ppm, 9000 ppm, 10000 ppm, 11000 ppm, 12000 ppm, 13000 ppm, 15000 ppm, 20000 ppm, 15000 ppm, 30000 ppm, 35000 ppm, 40000 ppm, 45000 ppm, and 50000 ppm or a range including any two of the values.

For the measurement of the mass content of the non-metal element, reference is made to the measurement method for the transition metal element in the foregoing text.

That the mass content of the non-metal element in the first coating layer falls within a proper range causes the non-metal element to be uniformly wrapped on the positive electrode material substrate, thereby effectively lowering a eutectic point of the first coating layer, and improving coating and melting effects of the transition metal element. In addition, a possibility of island accumulation due to excessive coating can be reduced, which reduces impact of the island accumulation on the performance of the material, so that the battery has low direct current internal resistance. The battery has an excellent gram capacity, excellent first coulombic efficiency, excellent high-temperature storage performance, and excellent high-temperature cycle performance, so that the battery has a small high-temperature gas production amount.

In some embodiments, based on the mass of the positive electrode material substrate, a mass content of the non-metal element in the first coating layer ranges from 500 ppm to 8000 ppm. In some embodiments, based on the mass of the positive electrode material substrate, a mass content of the non-metal element in the first coating layer is any value of 500 ppm, 1000 ppm, 1500 ppm, 2000 ppm, 3000 ppm, 4000 ppm, 5000 ppm, 6000 ppm, 7000 ppm, and 8000 ppm or a range including any two of the values.

That the mass content of the non-metal element in the first coating layer falls within a proper range can improve the high-temperature cycle performance and the high-temperature storage performance of the battery, reduce high-temperature gas production of the battery, and widen an operating temperature of the battery.

In some embodiments, based on the mass of the positive electrode material substrate, a mass content of Al in the second coating layer ranges from 100 ppm to 3500 ppm. In some embodiments, based on the mass of the positive electrode material substrate, a mass content of Al in the second coating layer is any value of 100 ppm, 500 ppm, 1000 ppm, 1500 ppm, 2000 ppm, 3000 ppm, and 3500 ppm or a range including any two of the values.

For the measurement of the mass content of Al in the second coating layer, reference is made to the measurement method for the transition metal element in the foregoing text.

That the mass content of Al in the first coating layer falls within a proper range causes the B to be uniformly and closely wrapped on the positive electrode material substrate, to form sufficient LiAlO₂, thereby effectively inhibiting generation of oxygen defects and reducing a possibility of a side reaction between the electrolytic solution and the material at a high temperature. Moreover, LiAlO₂ has good ionic conductivity, which reduces polarization of the battery and increases a capacity of the material. In addition, a possibility of island accumulation due to excessive coating can be reduced, which reduces impact of the island accumulation on the performance of the material, so that the battery has low direct current internal resistance. The battery has an excellent gram capacity, excellent first coulombic efficiency, excellent high-temperature storage performance, and excellent high-temperature cycle performance, so that the battery has a small high-temperature gas production amount.

In some embodiments, based on the mass of the positive electrode material substrate, a mass content of Al in the second coating layer ranges from 500 ppm to 2500 ppm. In some embodiments, based on the mass of the positive electrode material substrate, a mass content of Al in the second coating layer is any value of 500 ppm, 1000 ppm, 1500 ppm, 2000 ppm, and 2500 ppm or a range including any two of the values.

That the mass content of Al in the second coating layer falls within a proper range can form LiAlO₂ having good ionic conductivity, which reduces polarization of the battery and increases a gram capacity of the battery while avoiding an excessive coating amount, reducing a possibility of island accumulation, reducing impact of the island accumulation on the performance of the material, and can take all of the first coulombic efficiency, the high-temperature storage performance, the high-temperature storage performance, and the high-temperature gas production amount of the battery into account, to comprehensively improve the performance of the battery.

In some embodiments, based on the mass of the positive electrode material substrate, a mass content of B in the second coating layer ranges from 100 ppm to 2500 ppm. In some embodiments, based on the mass of the positive electrode material substrate, a mass content of B in the second coating layer is any value of 100 ppm, 500 ppm, 1000 ppm, 1500 ppm, 2000 ppm, and 2500 ppm or a range including any two of the values.

For the measurement of the mass content of B in the second coating layer, reference is made to the measurement method for the transition metal element in the foregoing text.

That the mass content of B in the first coating layer falls within a proper range causes B to be uniformly and closely wrapped on the positive electrode material substrate, to form sufficient Li₃BO₃, thereby effectively inhibiting generation of oxygen defects and reducing a possibility of a side reaction between an electrolytic solution and a material at a high temperature. In addition, Li₃BO₃ has good ionic conductivity, which reduces polarization of the battery and increases a capacity of the material. In addition, a possibility of island accumulation due to excessive coating can be reduced, and impact of the island accumulation on the performance of the material can be reduced, so that the battery has low direct current internal resistance. The battery has an excellent gram capacity, excellent first coulombic efficiency, excellent high-temperature storage performance, and excellent high-temperature cycle performance, so that the battery has a small high-temperature gas production amount.

In some embodiments, based on the mass of the positive electrode material substrate, a mass content of B in the second coating layer ranges from 500 ppm to 2000 ppm. In some embodiments, based on the mass of the positive electrode material substrate, a mass content of B in the second coating layer is any value of 500 ppm, 1000 ppm, 1500 ppm, and 2000 ppm or a range including any two of the values.

That the mass content of B in the second coating layer falls within a proper range can form Li₃BO₃ having good ionic conductivity, which reduces polarization of the battery and increases a gram capacity of the battery while avoiding an excessive coating amount, reducing a possibility of island accumulation, reducing impact of the island accumulation on the performance of the material, and can take all of the first coulombic efficiency, the high-temperature storage performance, the high-temperature storage performance, and the high-temperature gas production amount of the battery into account, to comprehensively improve the performance of the battery.

In some embodiments, a mass ratio of the element Al to the element B in the second coating layer ranges from 0.5 to 2. In some embodiments, a mass ratio of the element Al to the element B in the second coating layer is any value of 0.5, 1, 1.5, and 2 or a range including any two of the values.

The mass ratio of the element Al to the element B in the transition metal element may be measured by using a method known in the art. For example, the measurement may be performed with reference to the standard EPA 6010D-2014. Specifically, the measurement may be performed by using ICP-OES. First, a to-be-measured sample is dissolved into a liquid with a strong acid, and subsequently, the liquid is introduced to an ICP light source through atomization. Further, after to-be-measured gaseous atoms are ionized and excited in a strong magnetic field, the to-be-measured gaseous atoms are restored from an excited state to a ground state. Energy is released in the foregoing process and recorded as different characteristic spectral lines for quantitative element analysis, to obtain mass contents of Al and B and obtain a mass ratio M of the two through calculation.

The mass ratio of the element Al to the element B falls within a proper range. The battery has low direct current internal resistance. The battery has an excellent gram capacity, excellent first coulombic efficiency, excellent high-temperature storage performance, and excellent high-temperature cycle performance. The battery has a small high-temperature gas production amount.

In some embodiments, a total thickness of the first coating layer and the second coating layer ranges from 0.01 µm to 1 µm.

The total thickness of the first coating layer and the second coating layer may be measured by using a method known in the art. For example, a sample preparation compound and a composite positive electrode material powder are evenly mixed (a weight of the power is five times that of the sample preparation compound) and then coated onto a copper foil to obtain a sample, and then, the sample is baked at 60°C for 30 min. The prepared sample is cut into pieces with a size of 6 mm by 6 mm using a pair of scissors. A sample piece is fixed to a sample stage and put into an ion polisher (model: IB-19500CP). An edge of the sample piece is adjusted to be parallel to a center line, and at a position with distances of 40 to 60 µm to an X axis and a Y axis, for cutting. After the cutting, an X-Max energy spectrometer (EDS) of Oxford Instruments Group in the UK and a Sigma-02-33 model scanning electron microscope (SEM) of ZEISS in Germany are used together to select a suitable particle section on the cut sample. A feature element content of the first coating layer and a feature element of the second coating layer are linearly scanned in a diameter direction of a particle. If it is measured that a radius of the particle is R, a distance from a site at which an element content of the first coating layer starts to increase as compared to a core of the particle to a center of the particle is L1, a distance from a site at which an element content of the second coating layer starts to increase as compared to a core of the particle to a center of the particle is L2, and a total thickness of the first coating layer and the second coating layer is (R-L1) µm.

That the total thickness of the first coating layer and the second coating layer falls within a proper range causes an effective protective layer to be formed on the positive electrode material substrate while facilitating rapid transfer of lithium ions on the surface of the material and improving ion conductivity of the material, so that the battery has low direct current internal resistance, and the battery has an excellent gram capacity, excellent first coulombic efficiency, excellent high-temperature storage performance, and excellent high-temperature cycle performance, and the battery has a small high-temperature gas production amount.

In some embodiments, an aspect ratio of primary particles of the composite positive electrode material ranges from 1.5 to 10. In some embodiments, an aspect ratio of primary particles of the composite positive electrode material is any value of 1.5, 2, 3, 4, 5, 6, 7, 8, 9, and 10 or a range including any two of the values.

The total thickness of the first coating layer and the second coating layer may be measured by using a method known in the art. For example, measurement is performed by using a static image processing technology. After data, a long radius RL and short radius RS of primary particles of the powder, is obtained using a photographed static powder scanning electron scope photo and through intelligent recognition by the NonMeasure software, to calculate an aspect ratio=RL/RS of the primary particles.

That the aspect ratio of the primary particles of the composite positive electrode material falls within a proper range shortens a migration distance of lithium ions, improves de-intercalation kinetics of lithium ions, and reduces direct current internal resistance of the battery. In addition, the primary particles have a proper aspect ratio, small stress, and high particle strength During cyclic charging and discharging, as lithium ions repeatedly de-intercalate from and intercalate into the primary particles, the primary particles can still maintain a complete structure, which basically prevents transition metal inside the primary particles from escaping from the primary particles and being dissolved into the electrolytic solution, thereby improving cycle stability of the battery, and improving the high-temperature storage performance and the high-temperature cycle performance of the battery.

In some embodiments, an aspect ratio of primary particles of the composite positive electrode material ranges from 2 to 4. In some embodiments, an aspect ratio of primary particles of the composite positive electrode material is any value of 2, 2.5, 3, 3.5, and 4 or a range including any two of the values.

That the aspect ratio of the primary particles of the composite positive electrode material falls within a proper range can improve structural stability of the primary structure and cycle stability thereof. In addition, that the aspect ratio of the primary particles falls within a proper range can further reduce a contact area between the material and the electrolytic solution, reduce a possibility of a side reaction between the material and the electrolytic solution, improve the high-temperature cycle performance and the high-temperature storage performance of the battery, reduce high-temperature gas production of the battery, and widen an operating temperature of the battery.

In some embodiments, a span of the composite positive electrode material is greater than or equal to 0.5. In some embodiments, a span of the composite positive electrode material is greater than or equal to any one of 0.5, 0.6, 0.7, 0.8, 0.9, 1, 1.1, 1.2, 1.3, 1.4, 1.5, 1.6, 1.7, 1.8, 1.9, and 2.0.

In this specification, the term "span" refers to a value of (Dv90-Dv10)/Dv50 of a material.

In this specification, the term "Dv90" refers to a particle size accounting for 90% of a cumulative volume from a small-particle size side in a volume-based particle size distribution.

In this specification, the term "Dv10" refers to a particle size accounting for 10% of a cumulative volume from a small-particle size side in a volume-based particle size distribution.

In this specification, the term "Dv50" refers to a particle size accounting for 50% of a cumulative volume from a small-particle size side in a volume-based particle size distribution.

Measurement can be performed by using a well-known method in the art as a measurement method for the span of the composite positive electrode material. For example, volume-distribution particle sizes Dv10, Dv50, and Dv90 of the material can be measured by using a Malvern 3000 instrument with reference to the GB/T 19077-2016/ISO 13320:2009 particle size distribution laser diffraction method, and the span of the composite positive electrode material is further calculated.

The composite positive electrode material has a large particle size distribution. Large and small particles in the material cooperate with each other to fill gaps, which can improve a utilization of gaps and volumes between particles, so that the particles in the composite positive electrode material are denserly accumulated, compression resistance of the electrode plate is increased, the compaction density of the electrode plate is increased, and the energy density of the battery increased.

In some embodiments, a span of the composite positive electrode material is greater than or equal to 1.2. In some embodiments, a span of the composite positive electrode material is greater than or equal to any one of 1.2, 1.3, 1.4, 1.5, 1.6, 1.7, 1.8, 1.9, and 2.0.

That the span of the composite positive electrode material falls within a proper range can further increase a compaction density of an electrode plate and increase an energy density of the battery.

In some embodiments, an ODI of the composite positive electrode material is greater than or equal to 1.75. In some embodiments, an ODI of the composite positive electrode material is greater than or equal to any one of 1.75, 1.8, 1.9, and 2.0.

In this specification, the term "ODI" refers to a value of (I101/I012)^{0.5}, where I101 represents XRD diffraction peak intensity of the (101) crystal plane of the composite positive electrode material in an XRD pattern, and I012 represents diffraction peak intensity of the (012) crystal plane of the composite positive electrode material in the XRD pattern.

Measurement can be performed by using a well-known method in the art as a measurement method for the ODI of the composite positive electrode material. For example, an interval of 35° to 50° in the XRD pattern of the measured sample is scanned at a low speed (<2°/min), and the image is processed according to smoothing and filtering, to obtain diffraction peak areas I101 and I012 of the (101) crystal plane and (012) crystal plane, and the ODI is calculated through (I101/I012)^{0.5}.

That the ODI of the composite positive electrode material falls within a proper range can cause the composite positive electrode material to have a complete crystal structure and good structural stability, so that the crystal is not prone to collapse during intercalation and de-intercalation of lithium ions, thereby improving the high-temperature storage performance and the high-temperature cycle performance of the battery, and reducing high-temperature gas production of the battery.

In some embodiments, an ODI of the composite positive electrode material is greater than or equal to 1.8. In some embodiments, an ODI of the composite positive electrode material is greater than or equal to any one of 1.8, 1.85, 1.9, 1.95, and 2.0.

That the ODI of the composite positive electrode material is greater than or equal to 1.8 can further improve the high-temperature cycle performance and the high-temperature storage performance of the battery, reduce high-temperature gas production of the battery, and widen an operating temperature of the battery.

According to a second aspect of this application, a preparation method for a composite positive electrode material is provided, including step (1) and step (2):

Step (1): Uniformly mix a first raw material including a lithium source and a positive electrode material precursor, and perform a first calcination in a first atmosphere to obtain a first product, where optionally, the first raw material further includes an M source.

Step (2): Mix the first product and a second raw material including a transition metal element source in a second atmosphere to perform a second calcination, to prepare the composite positive electrode material, where

the composite positive electrode material includes a positive electrode material substrate and a first coating layer arranged on at least a part of the positive electrode material substrate, where a general formula of the positive electrode material substrate is:

Li_{b}NiₓCo_{y}Mn_{z}MₐO_{2-c},

where M includes one or more of Zr, Y, Al, Ti, W, Sr, Ta, Mo, Sb, Nb, Na, K, and Ca, 0.55≤x≤1.0, 0≤y≤0.45, 0≤z≤0.45, 0≤a≤0.45, 0.5≤b≤1.2, a+x+y+z+b=2, and -0.1≤c≤0.1; and
the first coating layer includes a transition metal element.

In some embodiments, the lithium source includes one or more of lithium hydroxide, lithium carbonate, lithium acetate, lithium nitrate, lithium oxalate, and lithium sulfate.

In some embodiments, the M source includes one or more of zirconium oxide, zirconium fluoride, zirconium chloride, yttrium oxide, yttrium sulfate, yttrium nitrate, yttrium oxalate, yttrium acetate, yttrium chloride, aluminum oxide, aluminum fluoride, aluminum chloride, lithium aluminate, titanium oxide, lithium titanate, tungsten oxide, tungstic acid, ammonium tungstate, sodium tungstate, lithium tungstate, strontium oxide, tantalum oxide, antimony oxide, niobium oxide, lithium niobate, molybdenum oxide, lithium molybdate, antimony oxide, lithium antimonate, sodium hydroxide, sodium carbonate, sodium chloride, sodium fluoride, sodium oxide, potassium hydroxide, potassium carbonate, potassium chloride, potassium oxide, calcium hydroxide, calcium carbonate, calcium oxide, calcium chloride, calcium fluoride, ammonium chloride, cerium fluoride, and cerium oxide.

In some embodiments, the transition metal element source includes one or more of cobalt tetroxide, cobalt hydroxide, cobaltous oxide, cobalt oxyhydroxide, cobalt acetate, cobalt oxalate, cobalt carbonate, cerium oxide, cerium fluoride, cerium chloride, cerium sulfide, cerium nitrate, and cerium hydroxide.

Through the foregoing preparation method, a transition metal element layer is coated on the positive electrode material substrate. The transition metal element in the first coating layer activates a lithiated rock salt structure on a surface of the positive electrode material substrate, so that lithium in the lithiated rock salt structure is more active, thereby improving the first coulombic efficiency and the gram capacity of the battery. The transition metal element in the first coating layer reacts with residual lithium on the surface of the positive electrode material substrate to generate a transition metal element-containing lithium salt material having high ionic conductivity, thereby increasing a transfer rate of lithium ions on a surface of the material, reducing the direct current internal resistance of the battery. The transition metal element in the first coating layer easily forms a dense coating layer on the surface of the positive electrode material substrate, which can reduce a possibility that active sites of the material are corroded by a byproduct of an electrolytic solution, thereby improving high-temperature cycling and high-temperature storage, and reducing high-temperature gas production.

In some embodiments, the transition metal element includes one or more of Ce, Co, Zr, La, Sb, W, and Li.

In some embodiments, the transition metal element includes one or both of Ce and Co.

In some embodiments, the second raw material further includes a compound having a melting point lower than 900°C.

In some embodiments, the compound having a melting point lower than 900°C includes one or more of lithium sulfate, sodium sulfate, potassium sulfate, lithium nitrate, sodium nitrate, potassium nitrate, lithium fluoride, sodium fluoride, potassium fluoride, lithium sulfide, sodium sulfide, potassium sulfide, lithium chloride, sodium chloride, potassium chloride, lithium oxalate, sodium oxalate, potassium oxalate, lithium acetate, sodium acetate, and potassium acetate.

Adding a compound having a melting point lower than 900°C to the second raw material causes the first coating layer to further include the melting point lower than 900°C, to cause the compound and the transition metal element to have a low eutectic point, which can improve coating and melting effects of the transition metal element. Therefore, the transition metal element is solid-fused into surface lattices of the positive electrode material substrate, thereby further increasing the gram capacity of the battery, reducing the direct current internal resistance of the battery, improving the high-temperature storage performance and the high-temperature cycle performance of the battery, and reducing high-temperature gas production of the battery.

In any embodiment, step (2) specifically includes:
mixing the first product and the second raw material in the second atmosphere uniformly, and performing the second calcination, to obtain a second product; and
mixing the second product and a third raw material uniformly, and performing a third calcination in a third atmosphere, to prepare the composite positive electrode material, where the third raw material includes one or more of an Al source, a B source, and a W source.

In some embodiments, the Al source includes one or more of aluminum oxide, aluminum hydroxide, aluminum sulfate, aluminum chloride, and aluminum nitrate.

In some embodiments, the B source includes one or more of boron chloride, boron sulfate, boron nitrate, boron nitride, boron oxide, boron fluoride, boron bromide, boron iodide, and boric acid.

In some embodiments, the W source includes one or more of ammonium metatungstate, ammonium tungstate, ammonium paratungstate, or tungsten trioxide.

Through the third calcination, a second coating layer is formed on a surface of the first coating layer. Al, B, and W included in the second coating layer may form a glassy material, such as LiAlO₂, Li₃BO₃, or Li₂WO₄, with the positive electrode material substrate. The glassy material is wrapped at grain boundaries of particles, which can suppress generation of oxygen defects, improve the high-temperature storage performance and the high-temperature cycle performance of the battery, and reduce high-temperature gas production of the battery. In addition, the glassy material has excellent ion conductivity, which can increase a transfer rate of lithium ions on the surface of the material, and reduce the direct current internal resistance of the battery.

In some embodiments, the first atmosphere is an air atmosphere or a pure oxygen atmosphere, a calcination temperature of the first calcination ranges from 700°C to 900°C, and a calcination time ranges from 10 h to 20 h.

In some embodiments, the first atmosphere is an air atmosphere.

In some embodiments, the first atmosphere is a pure oxygen atmosphere.

In some embodiments, a calcination temperature of the first calcination is any value of 700°C, 800°C, or 900°C or a range including any two of the values.

In some embodiments, a time of the first calcination is any value of 10 h, 11 h, 12 h, 13 h, 14 h, 15 h, 16 h, 17 h, 18 h, 19 h, or 20 h or a range including any two of the values.

A proper first calcination temperature and a proper calcination time can obtain a positive electrode material substrate having excellent structural performance, which provides a basis for obtaining a composite positive electrode material having excellent structural performance.

In some embodiments, the second atmosphere is a pure oxygen atmosphere or an air atmosphere, a calcination temperature of the second calcination ranges from 300°C to 650°C, and a calcination time ranges from 3 h to 10 h.

In some embodiments, the second atmosphere is a pure oxygen atmosphere.

In some embodiments, the second atmosphere is an air atmosphere.

In some embodiments, a calcination temperature of the second calcination is any value of 300°C, 350°C, 400°C, 450°C, 500°C, 550°C, 600°C, and 650°C or a range including any two of the values.

In some embodiments, a time of the second calcination is any value of 3 h, 4 h, 5 h, 6 h, 7 h, 8 h, 9 h, and 10 h or a range including any two of the values.

A proper second calcination temperature and a proper calcination time can obtain a first coating layer distributed uniformly, and a transition metal element in the first coating layer has good bonding strength with the positive electrode material substrate, which reduces a possibility of removing the first coating layer from the positive electrode material substrate, improves the structural stability of the composite positive electrode material, and allows the transition metal element in the first coating layer to fully play its role, thereby reducing direct current internal resistance of a battery, increasing a gram capacity and first coulombic efficiency of the battery, improving high-temperature storage performance and high-temperature cycle performance of the battery, reducing high-temperature gas production of the battery, and comprehensively improving electrochemical performance of the battery.

In some embodiments, the third atmosphere is an air atmosphere or a pure oxygen atmosphere, a calcination temperature of the third calcination ranges from 200°C to 500°C, and a calcination time ranges from 5 h to 15 h.

In some embodiments, the third atmosphere is a pure oxygen atmosphere.

In some embodiments, the third atmosphere is an air atmosphere.

In some embodiments, a calcination temperature of the third calcination is any value of 200°C, 250°C, 300°C, 350°C, 400°C, 450°C, and 500°C or a range including any two of the values.

In some embodiments, the third calcination time is any value of 5 h, 6 h, 7 h, 8 h, 9 h, 10 h, 11 h, 12 h, 13 h, 14 h, and 15 h and a range including any two of the values.

A proper third calcination temperature and a proper calcination time can obtain a second coating layer distributed uniformly, and Al, B, or W in the second coating layer has good bonding strength with the first coating layer, which reduces a possibility of removing the second coating layer from the first coating layer, improves the structural stability of the composite positive electrode material, and allows Al, B, or W in the second coating layer to fully play its role, thereby reducing direct current internal resistance of a battery, improving high-temperature storage performance and high-temperature cycle performance of the battery, and reducing high-temperature gas production of the battery.

### [Positive electrode plate]

The positive electrode plate includes a positive electrode current collector and a positive electrode film layer formed on at least a part of a surface of the positive electrode current collector, and the positive electrode film layer includes a composite positive electrode material in some embodiments.

For example, the positive electrode current collector has two opposite surfaces in its own thickness direction, and the positive electrode film layer is provided on either or both of the two opposite surfaces of the positive electrode current collector.

In some embodiments, the positive electrode current collector may be a metal foil or a composite current collector. For example, as a metal foil, an aluminum foil can be used. The composite current collector may include a polymer material substrate layer and a metal layer formed on at least one surface of the polymer material substrate layer. The composite current collector may be formed by forming a metal material (e.g., aluminum, an aluminum alloy, nickel, a nickel alloy, titanium, a titanium alloy, silver, or a silver alloy) on a polymer material substrate (e.g., a substrate of polypropylene (PP), polyethylene terephthalate (PET), polybutylene terephthalate (PBT), polystyrene (PS), or polyethylene (PE)).

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared in the following manner: dispersing the foregoing components for preparing the positive electrode plate, for example, the positive electrode active material, the conductive agent, the binder, and any other components, in a solvent (for example, N-methylpyrrolidone) to form a positive electrode slurry; and coating a positive electrode current collector with the positive electrode slurry, followed by drying, cold pressing, and other procedures, to obtain the positive electrode plate.

### [Negative electrode plate]

The negative electrode plate includes a negative electrode current collector and a negative electrode film layer arranged on at least one surface of the negative electrode current collector. The negative electrode film layer includes a negative electrode active material.

For example, the negative electrode current collector has two opposite surfaces in a thickness direction thereof, and the negative electrode film layer is arranged on any one or both of the two opposite surfaces of the negative electrode current collector.

In some embodiments, the negative electrode current collector may be a metal foil or a composite current collector. For example, as a metal foil, a copper foil can be used. The composite current collector may include a polymer material substrate layer and a metal layer formed on at least one surface of the polymer material substrate layer. The composite current collector may be formed by forming a metal material (copper, a copper alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the negative electrode active material may be a negative electrode active material known in the art for a battery. For example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon oxide, a silicon-carbon composite, a silicon-nitride composite, and a silicon alloy. The tin-based material may be selected from at least one of elemental tin, tin oxide, and a tin alloy. However, this application is not limited to these materials, and other conventional materials that can be used as the negative electrode active material of the battery may also be used. These negative electrode active materials may be used individually or in combination of more than two thereof.

In some embodiments, the negative film layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative-electrode film layer further optionally includes a conductive agent. The conductive agent can be selected from at least one of superconducting carbon, acetylene black, carbon black, Ketjen black, carbon dots, carbon nanotubes, graphene, and carbon nanofibers.

In some embodiments, the negative electrode film layer further optionally includes other adjuvants such as a thickener (for example, sodium carboxymethyl cellulose (CMC-Na)).

In some embodiments, the negative electrode plate may be prepared in the following manner: dispersing the foregoing components, such as the negative electrode active material, the conductive agent, the binder, and any other components for preparing the negative electrode plate, in a solvent (for example, deionized water) to form a negative electrode slurry; and coating a negative electrode current collector with the negative electrode slurry, followed by drying, cold pressing, and other procedures, to obtain the negative electrode plate.

### [Electrolyte]

The electrolyte serves to conduct ions between the positive electrode plate and the negative electrode plate. The type of the electrolyte is not particularly limited in this application, and may be selected according to requirements. For example, the electrolyte may be in a liquid, gel, or fully-solid state.

In some embodiments, an electrolytic solution is used as the electrolyte. The electrolytic solution includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane dimethyl sulfone, ethyl methyl sulfone, and diethyl sulfone.

In some embodiments, the electrolytic solution may optionally include an additive. For example, the additive may include a negative electrode film-forming additive and a positive electrode film-forming additive. The additive may further include an additive capable of improving some performance of the battery, for example, an additive capable of improving overcharge performance of the battery, and an additive capable of improving high-temperature or low-temperature performance of the battery.

### [Separator]

In some embodiments, the secondary battery further includes a separator. The type of the separator is not particularly limited in this application, and any well-known separator of a porous structure having good chemical stability and mechanical stability may be used.

In some embodiments, the material of the separator may be selected from at least one of glass fiber, non-woven cloth, polyethylene, polypropylene, and polyvinylidene fluoride. The separator may be a single-layer film or a multi-layer composite film, which is not particularly limited herein. When the separator is a multi-layer composite film, the material of each layer may be the same or different, which is not particularly limited.

In some embodiments, the positive electrode plate, the negative electrode plate, and the separator may be made into an electrode assembly by a winding process or a lamination process.

In some embodiments, the secondary battery may include an outer package. The outer package may be configured to package the electrode assembly and the electrolyte.

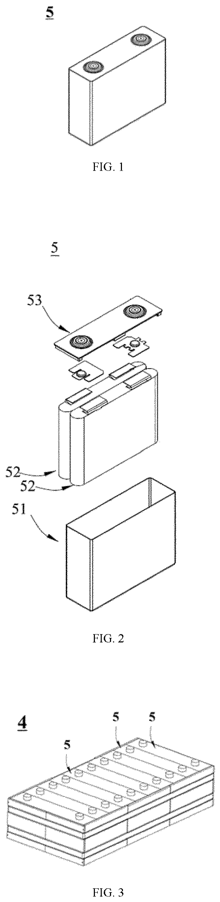

A shape of the secondary battery is not particularly limited in this application, and the secondary battery may be in a shape of a cylinder, in a shape of a square, or in any other shape. For example, FIG. 1 shows a secondary battery 5 of a square structure as an example. FIG. 2 is an exploded view of the secondary battery 5.

In some embodiments, referring to FIG. 2, an outer package may include a case 51 and a cover plate 53. The case 51 may include a bottom plate and side plates connected to the bottom plate, and the bottom plate and the side plates enclose an accommodating cavity. The case 51 has an opening communicating with the accommodating cavity, and the cover plate 53 can cover the opening to seal the accommodating cavity. The positive electrode plate, the negative electrode plate, and the separator may form an electrode assembly 52 through a winding process or a lamination process. The electrode assembly 52 is encapsulated in the accommodating cavity. A non-Newtonian fluid electrolyte composition infiltrates into the electrode assembly 52. The secondary battery 5 may include one or more electrode assemblies 52, and a person skilled in the art can make a selection according to actual requirements.

In some embodiments, the secondary battery may be assembled into a battery module, and a quantity of secondary batteries included in the battery module may be one or more, which may be specifically determined by a person skilled in the art based on the application and capacity of the battery module.

FIG. 3 shows a battery module 3 as an example. Referring to FIG. 3, in the battery module 3, a plurality of secondary batteries 5 may be sequentially arranged in a length direction of the battery module 3. Certainly, the plurality of secondary batteries 5 may also be arranged in any other manner. The plurality of secondary batteries 5 may further be secured by fasteners.

Optionally, the battery module 3 may further include a can having an accommodating space, and the plurality of secondary batteries 5 are accommodated in the accommodating space.

In some embodiments, the battery modules may be further assembled into a battery pack, and the battery pack may include one or more battery modules. A specific quantity may be chosen by a person skilled in the art based on the application and capacity of the battery pack.

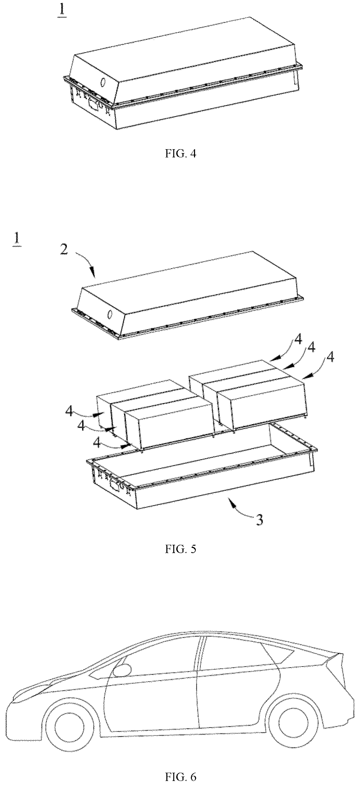

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3, to form an enclosed space for accommodating the battery modules 4. The plurality of battery modules 4 may be arranged in the battery box in any manner.

### [Electric device]

In an embodiment of this application, an electric device is provided, including the secondary battery according to any embodiment, the battery module according to any embodiment, or the battery pack according to any embodiment.

The electric device includes at least one of the secondary battery, the battery module, or the battery pack provided in this application. The secondary battery, the battery module, or the battery pack may be used as a power supply of the electric device, or may be used as an energy storage unit of the electric device. The electric device may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

A secondary battery, a battery module, or a battery pack can be selected based on a usage need of an electric device.

FIG. 6 shows an electric device as an example. The electric device is a pure electric vehicle, a hybrid electric vehicle, a plug-in hybrid electric vehicle, or the like. To satisfy requirements of the electric device for high power and a high energy density of the secondary battery, a battery pack or a battery module may be used.

Another example of the device may be a mobile phone, a tablet computer, a notebook computer, or the like. The device is generally required to be thin and light, and may have a secondary battery used as a power supply.

### Examples

The examples of this application are described below. The examples described below are illustrative, are merely used to explain this application, and should not be construed as a limitation to this application. Where specific techniques or conditions are not specified in the examples, the techniques or conditions described in the literatures of the art or the product specifications are followed. Where no manufacturer is indicated for the reagents or instruments used, they are conventional products that can be commercially obtained.

### I. Preparation method

### Example 1

### 1) Preparation of a composite positive electrode material

Step (0): Preparation of a composite positive electrode material precursor: Nickel sulfate, cobalt sulfate, and manganese sulfate were prepared into a 2 mol/L metal salt solution in a molar ratio of 0.92:0.07:0.01, and then the metal salt solution, 8 mol/L ammonia solution, and 5 mol/L NaOH solution were consecutively added to a reactor for reaction. By controlling, during the reaction, a pH value at 11.30, an ammonia concentration at 4.0 g/L, a reaction time at 20 h, and a stirring rate at 300 r/min, the positive electrode material precursor (Ni_{0.92}Co_{0.07}Mn_{0.01}(OH)₂) was prepared by using a hydroxide co-precipitation method, where a span of the precursor is 1.4.

### Step (1) Preparation of a composite positive electrode material

Step (1-1): Lithium hydroxide, the positive electrode material precursor Ni_{0.92}Co_{0.07}Mn_{0.01}(OH)₂ and Sb₂O₃ were placed in a high-speed mixer for mixing to obtain a first mixed material, where a molar ratio of the lithium hydroxide to the positive electrode material precursor was 1.03, and a mass content of the Sb element was 3600 ppm based on a mass of the positive electrode material precursor. Then, the first mixed material was placed into a kiln for a first calcination in a pure oxygen atmosphere at a calcination temperature of 760°C for 20 h, to obtain a first product.

Step (1-2): The first product, cobalt oxyhydroxide (CoOOH), cerium dioxide (CeO₂), and the lithium sulfate Li₂SO₄ were placed into the high-speed mixer for mixing, to obtain a second mixture, where based on a mass of the first product, a mass content of the Co element was 2284 ppm, a mass content of the Ce element was 2716 ppm, a mass content of the Li element was 2000 ppm, a mass content of the S element was 4600 ppm, a mass content of the Al element was 1000 ppm, and a mass content of the B element was 1000 ppm. In a pure oxygen atmosphere, the second mixture was placed into the kiln for a calcination at a calcination temperature of 650°C for 5 h, to obtain a second product.

Step (1-3): The second product, aluminum oxide (Al₂O₃), and orthoboric acid (H₃BO₃) were mixed and placed into the high-speed mixer for mixing, to obtain a third mixture, where based on the mass of the first product, a mass content of the Al element was 1000 ppm, and a mass content of the B element was 1000 ppm. In a pure oxygen atmosphere, the third mixture was placed into the kiln for a calcination at a calcination temperature of 400°C for 5 h, to obtain a composite positive electrode material.

### 2) Preparation of a positive electrode plate

The composite positive electrode material was added to a 5 L stirring tank, and premixed for 30 min. Then, a conductive agent acetylene black (SP) and a binder polyvinylidene fluoride (PVDF) were added and stirred for 30 min for mixing. Then, a solvent N-methylpyrrolidone (NMP) was added and stirred rapidly under a vacuum condition to form a positive electrode slurry. A mass ratio of the composite positive electrode material to the acetylene black to the polyvinylidene fluoride=96:2:2, and a solid content of the positive electrode slurry was 70%. The positive electrode slurry was uniformly coated onto both sides of an aluminum foil having a thickness of 12 µm. The coated electrode plate was dried in an oven at 100°C to 130°C for half an hour. The dried electrode plate was rolled and punched to obtain a positive electrode plate.

### 3) Preparation of a negative electrode plate

A negative electrode active material artificial graphite, hard carbon, a conductive agent acetylene black, a binder styrene-butadiene rubber (SBR), and a thickener sodium carboxymethyl cellulose (CMC) at a weight ratio of 90:5:2:2:1 were fully stirred and uniformly mixed in a deionized water solvent system, and then a resulting mixture was coated onto a copper foil, followed by drying and cold pressing, to obtain a negative electrode plate.

### 4) Electrolytic solution

In an argon atmosphere glove box (H₂O<0.1 ppm, O₂<0.1ppm), a lithium salt, lithium hexafluorophosphate LiPF₆, was dissolved in organic solvent ethylene carbonate/ethyl methyl carbonate/dimethyl carbonate (a volume ratio of EC+EMC+DMC was 1:1:1) and stirred uniformly, to obtain an electrolytic solution with a LiPF₆ concentration of 1 mol/L.

### 5) Separator

A porous polyethylene polymeric film was used as a separator.

### 6) Preparation of a full battery

The positive electrode plate, the separator, and the negative electrode plate were stacked sequentially, so that the separator was located between the positive electrode plate and the negative electrode plate for separation, and then a bare battery core was obtained by winding. The bare battery core was welded with tabs, filled into an aluminum case, and baked at 80°C to remove water. Then, the electrolytic solution was immediately injected, and the opening was sealed, to obtain an uncharged battery. The uncharged battery then went through procedures, such as standing, hot and cold pressing, forming, reshaping, and capacity testing, sequentially to obtain a lithium battery product of Example 1.

A preparation method for the battery of Example 2 was similar to the preparation method for the battery of Example 1, but Sb₂O₃ was not added in step (1-1), the Co source added in step (1-2) was cobalt oxyhydroxide (CoOOH), and step (1-3) was skipped.

A preparation method for the battery of Example 3 was similar to the preparation method for the battery of Example 1, but the mass content of Zr added in step (0) was 3600 ppm based on the mass of the positive electrode material precursor.

### Examples 4 to 9

The preparation methods for the batteries of Examples 4 to 9 were similar to the preparation method for the battery of Example 1, but mass contents of the transition metal element, the alkali metal element, the non-metal element, the Al element, and the B element based on the first product were adjusted. Specific parameters were shown in Table 1.

### Examples 10 to 13

The preparation methods for the batteries of Examples 10 to 13 were similar to the preparation method for the battery of Example 1, but the added Ce source was CeF₃ and mass contents of the transition metal element, the alkali metal element, the non-metal element, the Al element, and the B element based on the first product were adjusted. Specific parameters were shown in Table 1.

### Examples 14 to 16

The preparation methods for the batteries of Examples 14 to 16 were similar to the preparation method for the battery of Example 1, but mass contents of the transition metal element, the alkali metal element, the non-metal element, the Al element, and the B element based on the first product were adjusted. Specific parameters were shown in Table 1.

### Examples 17 to 22

The preparation methods for the batteries of Examples 17 to 22 were similar to the preparation method for the battery of Example 1, but the added Co source was Co(OH)₂, the added Ce source was CeF₃, and mass contents of the transition metal element, the alkali metal element, the non-metal element, the Al element, and the B element based on the first product were adjusted. Specific parameters were shown in Table 1.

### Examples 23 to 28

The preparation methods for the batteries of Examples 23 to 28 were similar to the preparation method for the battery of Example 1, but mass contents of the transition metal element, the alkali metal element, the non-metal element, the Al element, and the B element based on the first product were adjusted. Specific parameters were shown in Table 1.

### Examples 29 to 31

The preparation methods for the batteries of Examples 29 to 31 were similar to the preparation method for the battery of Example 1, but the span value of the precursor was adjusted to 0.2, 0.5, or 1.2, and further, the span value of the composite positive electrode material was adjusted. Specific parameters were shown in Table 1.

### Comparative example 1

The preparation method for the battery of Comparative example 1 was similar to the preparation method for the battery of Example 2, but the composite positive electrode material included only the positive electrode material substrate without including a first coating. Specific parameters were shown in Table 1.

### Comparative example 2

The preparation method for the battery of Comparative example 2 was similar to the preparation method for the battery of Comparative example 1, but the components of the positive electrode active substrate were adjusted. Specific parameters were shown in Table 1.

### II. Performance test

### 1. Performance test on a composite positive electrode material

### 1) Determine that the Co and Ce elements are present in a form of oxides or fluoridates

The measurement was performed with reference to the standard EPA 6010D-2014. Specifically, the measurement may be performed by using ICP-OES. First, a to-be-measured sample was dissolved into a liquid with a strong acid, and subsequently, the liquid was introduced to an ICP light source through atomization. Further, after to-be-measured gaseous atoms were ionized and excited in a strong magnetic field, the to-be-measured gaseous atoms were restored from an excited state to a ground state. Energy was released in the foregoing process and recorded as different characteristic spectral lines for element trace analysis, to determine that the Co and Ce elements are present in a form of oxides or fluoridates.

### 2) Perform test on a mass content of the transition metal element/alkali metal element/non-metal element/aluminum element/boron element

The measurement was performed with reference to the standard EPA 6010D-2014. Specifically, the measurement may be performed by using ICP-OES. First, a to-be-measured sample was dissolved into a liquid with a strong acid, and subsequently, the liquid was introduced to an ICP light source through atomization. Further, after to-be-measured gaseous atoms are ionized and excited in a strong magnetic field, the to-be-measured gaseous atoms were restored from an excited state to a ground state. Energy was released in the foregoing process and recorded as different characteristic spectral lines for quantitative element analysis.

### 3) Perform test on the total thickness of the first coating layer and the second coating layer

A sample preparation compound and a composite positive electrode material powder were evenly mixed (a weight of the power is five times that of the sample preparation compound) and then coated onto a copper foil to obtain a sample, and then, the sample was baked at 60°C for 30 min. The prepared sample was cut into pieces with a size of 6 mm by 6 mm using a pair of scissors. A sample piece was fixed to a sample stage and put into an ion polisher (model: IB-19500CP). An edge of the sample piece was adjusted to be parallel to the center line and at a position with distances of 40 to 60 µm to an X axis and a Y axis, for cutting. After the cutting, an X-Max energy spectrometer (EDS) of Oxford Instruments Group in the UK and a Sigma-02-33 model SEM of ZEISS in Germany were used together to select a suitable particle section on the cut sample. A feature element content of the first coating layer and a feature element of the second coating layer were linearly scanned in a diameter direction of a particle. If it was measured that a radius of the particle was R, a distance from a site at which an element content of the first coating layer started to increase as compared to a core of the particle to a center of the particle was L1, a distance from a site at which an element content of the second coating layer started to increase as compared to a core of the particle to a center of the particle was L2, and a total thickness of the first coating layer and the second coating layer was (R-L1) µm.

### 4) Perform test on an aspect ratio of the composite positive electrode material

Static image processing technology: After data, a long radius RL and short radius RS of primary particles of the powder, was obtained using a photographed static powder scanning electron scope photo and through intelligent recognition by the NonMeasure software, to calculate an aspect ratio=RL/RS.

### 5) Perform test on an ODI

An interval of 35° to 50° in the XRD pattern of the measured sample was scanned at a low speed (<2°/min), and the image was processed according to smoothing and filtering, to obtain diffraction peak areas I₁₀₁ and I₀₁₂ of the (101) crystal plane and (012) crystal plane, and the ODI was calculated through (I₁₀₁/I₀₁₂)^{0.5}.

### 6) Perform test on a span

According to the GB/T 19077-2016 particle size analysis-laser diffraction method, 0.1 g to 0.13 g of a to-be-tested composite positive electrode material sample was weighed using a 50 mL beaker, 5 g of absolute ethanol was added, and after a stirring rod of about 2.5 mm was added, the beaker was sealed with a plastic wrap. The sample was sonicated for 5 min, transferred to a magnetic stirrer, and stirred at 500 rpm for 20 min or more. 2 samples were tested for each batch of products. The Malvern 3000 laser particle size analyzer from Malvern Instruments Inc. was used for the test. Dv90 refers to the corresponding particle size when the cumulative volume distribution percentage of the secondary particles of the composite positive electrode material reaches 99%, Dv50 refers to the corresponding particle size when the cumulative volume distribution percentage of the secondary particles of the composite positive electrode material reaches 50%, and Dv10 refers to the corresponding particle size when the cumulative volume distribution percentage of the secondary particles of the composite positive electrode material reaches 10%, where span=(Dv90-Dv10)/Dv50.

### 2. Performance test on a positive electrode plate

### 1) Perform test on a compaction density

A compaction density PD of the positive electrode plate was calculated by using a formula PD=M/(d×A). In the formula, M was a mass of a small disc with a diameter of 40 mm that was cut from the positive electrode plate, and an average value was obtained by weighing for 10 times; d was a thickness of the positive electrode plate, and an average value was obtained by measuring the thickness for 10 times; and A was an area of the small disc with a diameter of 40 mm.

### 3. Performance test on a full battery

### 1) Perform test on a 1/3 C full electric gram capacity

A battery was allowed to stand for 5 min in a constant temperature environment at 25°C, discharged at 1/3 C to 2.8 V, allowed to stand for 5 min, charged at 1/3 C to 4.25 V, then charged with a constant voltage at 4.25 V to a current less than or equal to 0.05 C, allowed to stand for 5 min, and then discharged at 1/3 C to 2.8 V, and a discharge capacity at this time was an initial gram capacity and recorded as D0.

### 2) Perform test on first coulombic efficiency

A button cell was charged to 4.3 V at 0.1 C under a voltage of 2.8 V to 4.25 V, then charged at a constant voltage of 4.3 V to a current less than or equal to 0.05 mA, allowed to stand for 2 min, where a charging capacity at this time was recorded as C0, and then discharged to 2.8 V at 0.1 C, where a discharge capacity at this time was an initial gram capacity and recorded as D0.

The first coulombic efficiency was calculated according to D0/C0×100%.

### 3) Perform test on direct current resistance

A battery was allowed to stand for 5 min in a constant temperature environment at 25°C, discharged at 1/3 C to 2.8 V, allowed to stand for 5 min, charged at 1/3 C to 4.25 V, then charged with a constant voltage at 4.25 V to a current less than or equal to 0.05 C, allowed to stand for 5 min, and then discharged at 1/3 C to 2.8 V, and a discharge capacity at this time was recorded as D0.

The battery was allowed to stand for 30 min in a constant temperature environment at 25°C, charged at a current of 1/3D0 to 4.25 V, charged at a constant voltage of 4.25 V to a current less than or equal to 0.05D0, allowed to stand for 30 min, then, discharged to a capacity position of 0.5D0 at a current of 1/3D0, and allowed to stand for 10 min.

The battery was allowed to stand for 120 min in a constant temperature environment at -25°C, and discharged for 10s at a current of 0.36D0, and a voltage change ΔU at this time was recorded. The direct current internal resistance R_{50%} of 50% SOC at -25°C was calculated according to an Ohm formula R_{50%}=ΔU/(0.36D0).

### 4) High-temperature cycle performance

At 45°C, a battery was charged to 4.25 V at a constant current of 1 C, then charged at a constant voltage of 4.25 V until the current dropped to 0.05 C, and then discharged to 2.8 V at a constant current of 1 C, to obtain a first-cycle discharge capacity (Cdl). In this way, charging and discharging were repeated until the 300^{th} cycle, and a specific discharge capacity of the lithium-ion battery after n cycles is recorded as Cdn. Capacity retention rate=discharge capacity Cdn after n cycles/first-cycle discharge capacity (Cd1).

### 5) High-temperature storage performance

The foregoing prepared secondary batteries in the foregoing examples and comparative examples were respectively allowed to stand for 5 min at a constant temperature of 25°C, discharged to 2.8 V at 1/3 C, allowed to stand for 5 min, charged to 4.25 V at 1/3 C, then charged at a constant voltage of 4.25 V to a current less than or equal to 0.05 mA, allowed to stand for 5 min, where a charge capacity at this time was recorded as C0, and then, discharged to 2.8 V at 1/3 C, where a discharge capacity at this time was an initial gram capacity, and recorded as D0. Then, the batteries were charged to 4.25 V at a constant current of 0.33 C and charged to a current less than or equal to 0. 05 mA at a constant voltage, allowed to stand for 5 min, then placed into a high-temperature and low-temperature box at 60°C, allowed to stand for 1 h until temperatures of the batteries reaches a target temperature, and stored. The batteries were taken out after 15 days. The foregoing process was repeated in a constant temperature environment at 25°C, and a capacity Dn (n=0, 1, 2, ...) was recorded every 15 days. A capacity retention rate after 60 days of storage is calculated: (D4-D0)/D0*100%.

### 6) High-temperature storage and gas production performance

A full battery with a 100% state of charge (SOC) was stored at 70°C. The open-circuit voltage (OCV) and alternating current internal resistance (IMP) of the battery core were measured before, after and during the storage to monitor the SOC and measure the volume of the battery core. The full battery was taken out after every 48 h of storage and allowed to stand for 1 h. Then, the OCV and the internal resistance (IMP) were measured. A battery core volume was measured by using a water displacement method after the full battery was cooled to room temperature. In the water displacement method, a gravity F 1 of the battery core was first measured with a balance allowing automatic unit conversion of dial data; then the battery core was completely immersed in deionized water (whose density was known to be 1 g/cm³), a gravity F2 of the battery core at this time was measured, and a buoyant force F_{float} for the battery core was F1-F2. According to the Archimedes' principle F_{float}=ρ×g×V_{drainage}, a volume V of the battery core was calculated according to V=(F1-F2)/(ρ×g).

Each time a volume was measured, the battery core was charged to 4.25 V at a constant current of 1 C, and then charged at a constant voltage of 4.25 V until the current dropped to 0.05 C, and after the charging was completed, the battery core was placed into the box to continue the test.

After 60 days of storage, a volume of the battery core was measured, and an increase, that is, a gas production amount, in the volume of the battery core after the storage relative to the volume of the battery core before the storage was calculated.

### III. Analysis of test results of examples and comparative examples

In accordance with the above methods, the batteries of the examples and comparative examples are prepared, and tested for various performance parameters. The results are shown in Table 1 and Table 2 as below.

**Table 1**

| No. | Composite positive electrode material | | | | | | | | | | | | | | | | |
|---|---|---|---|---|---|---|---|---|---|---|---|---|---|---|---|---|---|
| | Positive electrode material substrate | First coating layer | | | | | | | | | Second coating layer | | | Thickness of coating layer/µm | Aspect ratio | Span | ODI |
| | | Transition metal element | | | | Compound having a melting point lower than 900°C | Alkali metal element | | Non-metal element | | Mass content of Al/ppm | Mass content of B/ppm | Mass ratio of Al to B | | | | |
| | | Element name | Co source and Ce source | Mass contents /ppm | Molar ratio of Ce to Co | Name | Element name | Mass content/ppm | Element name | Mass content/ppm | | | | | | | |
| Example 1 | LiNi_{0.92}Co_{0.06}Mn_{0.018}Sb_{0.002}O₂ | Co+Ce | CoOOH, CeO₂ | 2284+2716 | 0.5 | Li₂SO₄ | Li | 2000 | S | 4600 | 1000 | 1000 | 1 | 0.14 | 3 | 1.4 | 1.90 |
| Example 2 | LiNi_{0.92}Co_{0.07M}n_{0.01}O₂ | Co | CoOOH | 5000 | / | / | / | 0 | / | 0 | 0 | 0 | / | 0.01 | 1.5 | 1.4 | 1.90 |
| Example 3 | LiNi_{0.92}Co_{0.06}Mn_{0.018}Sb_{0.002}O₂ | Co+Ce | CoOOH, CeO₂ | 2284+2716 | 0.5 | Li₂SO₄ | Li | 2000 | S | 4600 | 1000 | 1000 | 1 | 0.14 | 3 | 1.4 | 1.90 |
| Example 4 | LiNi_{0.92}Co_{0.06}Mn_{0.018}Sb_{0.002}O₂ | Co | CoOOH | 5000 | / | / | | 0 | | 0 | 0 | 0 | / | 0.01 | 1.5 | 1.4 | 1.90 |
| Example 5 | LiNi_{0.92}Co_{0.06}Mn_{0.018}Sb_{0.002}O₂ | Co | CoOOH | 5000 | | Li₂SO₄ | Li | 2000 | S | 4600 | 0 | 0 | 0 | 0.14 | 1.5 | 1.4 | 1.90 |
| Example 6 | LiNi_{0.92}Co_{0.06}Mn_{0.018}Sb_{0.002}O₂ | Co | CoOOH | 5000 | / | Li₂SO₄ | Li | 2000 | S | 4600 | 1000 | 1000 | 1 | 0.14 | 1.5 | 1.4 | 1.90 |
| Example 7 | LiNi_{0.92}Co_{0.06}Mn_{0.018}Sb_{0.002}O₂ | Ce | CeO₂ | 5000 | / | Li₂SO₄ | Li | 2000 | S | 4600 | 1000 | 1000 | 1 | 0.14 | 2 | 1.4 | 1.90 |
| Example 8 | LiNi_{0.92}Co_{0.06}Mn_{0.018}Sb_{0.002}O₂ | Co+Ce | CoOOH, CeO₂ | 2284+2716 | 0.5 | Na₂SO₄ | Na | 1000 | S | 700 | 1000 | 1000 | 1 | 0.10 | 3 | 1.4 | 1.90 |
| Example 9 | LiNi_{0.92}Co_{0.06}Mn_{0.018}Sb_{0.002}O₂ | Co+Ce | CoOOH, CeO₂ | 2284+2716 | 0.5 | LiF | Li | 2000 | F | 5500 | 1000 | 1000 | 1 | 0.14 | 3 | 1.4 | 1.90 |
| Example 10 | LiNi_{0.92}Co_{0.06}Mn_{0.018}Sb_{0.002}O₂ | Co+Ce | CoOOH, | 46+54 | 0.5 | Li₂SO₄ | Li | 2000 | S | 4600 | 1000 | 1000 | 1 | 0.13 | 3 | 1.4 | 1.90 |
| | | | CeF₃ | | | | | | | | | | | | | | |
| Example 11 | LiNi_{0.92}Co_{0.06}Mn_{0.018}Sb_{0.002}O₂ | Co+Ce | CoOOH, CeF₃ | 228+272 | 0.5 | Li₂SO₄ | Li | 2000 | S | 4600 | 1000 | 1000 | 1 | 0.14 | 3 | 1.4 | 1.95 |
| Example 12 | LiNi_{0.92}Co_{0.06}Mn_{0.018}Sb_{0.002}O₂ | Co+Ce | CoOOH, CeF₃ | 6853+8147 | 0.5 | Li₂SO₄ | Li | 2000 | S | 4600 | 1000 | 1000 | 1 | 0.16 | 3 | 1.4 | 1.78 |
| Example 13 | LiNi_{0.92}Co_{0.06}Mn_{0.018}Sb_{0.002}O₂ | Co+Ce | CoOOH, CeF₃ | 9137+10863 | 0.5 | Li₂SO₄ | Li | 2000 | S | 4600 | 1000 | 1000 | 1 | 0.20 | 3 | 1.4 | 1.75 |
| Example 14 | LiNi_{0.92}Co_{0.06}Mn_{0.018}Sb_{0.002}O₂ | Co+Ce | CoOOH, CeO₂ | 4040+960 | 0.1 | Li₂SO₄ | Li | 2000 | S | 4600 | 1000 | 1000 | 1 | 0.14 | 1.8 | 1.4 | 1.90 |
| Example 15 | LiNi_{0.92}Co_{0.06}Mn_{0.018}Sb_{0.002}O₂ | Co+Ce | CoOOH, CeO₂ | 1480+3520 | 1 | Li₂SO₄ | Li | 2000 | S | 4600 | 1000 | 1000 | 1 | 0.14 | 4 | 1.4 | 1.90 |
| Example 16 | LiNi_{0.92}Co_{0.06}Mn_{0.018}Sb_{0.002}O₂ | Co+Ce | CoOOH, CeO₂ | 202+4798 | 10 | Li₂SO₄ | Li | 2000 | S | 4600 | 1000 | 1000 | 1 | 0.14 | 10 | 1.4 | 1.90 |
| Example 17 | LiNi_{0.92}Co_{0.06}Mn_{0.018}Sb_{0.002}O₂ | Co+Ce | Co(OH)₂, CeF₃ | 2284+2716 | 0.5 | Li₂SO₄ | Li | 100 | S | 50 | 1000 | 1000 | 1 | 0.02 | 3 | 1.4 | 1.90 |
| Example 18 | LiNi_{0.92}Co_{0.06}Mn_{0.018}Sb_{0.002}O₂ | Co+Ce | Co(OH)₂, CeF₃ | 2284+2716 | 0.5 | Li₂SO₄ | Li | 5000 | S | 500 | 1000 | 1000 | 1 | 0.34 | 3 | 1.4 | 1.90 |
| Example 19 | LiNi_{0.92}Co_{0.06}Mn_{0.018}Sb_{0.002}O₂ | Co+Ce | Co(OH)₂, CeF₃ | 2284+2716 | 0.5 | Li₂SO₄ | Li | 12000 | S | 2000 | 1000 | 1000 | 1 | 0.80 | 3 | 1.4 | 1.90 |
| Example 20 | LiNi_{0.92}Co_{0.06}Mn_{0.018}Sb_{0.002}O₂ | Co+Ce | Co(OH)₂, CeF₃ | 2284+2716 | 0.5 | Li₂SO₄ | Li | 15000 | S | 3000 | 1000 | 1000 | 1 | 1.00 | 3 | 1.4 | 1.90 |
| Example 21 | LiNi_{0.92}Co_{0.06}Mn_{0.018}Sb_{0.002}O₂ | Co+Ce | Co(OH)₂, CeO₂ | 2284+2716 | 0.5 | Li₂SO₄ | Li | 2000 | S | 4600 | 1000 | 0 | / | 0.14 | 3 | 1.4 | 1.90 |
| Example 22 | LiNi_{0.92}Co_{0.06}Mn_{0.018}Sb_{0.002}O₂ | Co+Ce | Co(OH)₂, CeO₂ | 2284+2716 | 0.5 | Li₂SO₄ | Li | 2000 | S | 4600 | 0 | 1000 | / | 0.14 | 3 | 1.4 | 1.90 |
| Example 23 | LiNi_{0.92}Co_{0.06}Mn_{0.018}Sb_{0.002}O₂ | Co+Ce | CoOOH, | 2284+2716 | 0.5 | Li₂SO₄ | Li | 2000 | S | 4600 | 100 | 100 | 1 | 0.14 | 3 | 1.4 | 1.90 |
| | | | CeO₂ | | | | | | | | | | | | | | |
| Example 24 | LiNi_{0.92}Co_{0.06}Mn_{0.018}Sb_{0.002}O₂ | Co+Ce | CoOOH, CeO₂ | 2284+2716 | 0.5 | Li₂SO₄ | Li | 2000 | S | 4600 | 500 | 500 | 1 | 0.14 | 3 | 1.4 | 1.90 |
| Example 25 | LiNi_{0.92}Co_{0.06}Mn_{0.018}Sb_{0.002}O₂ | Co+Ce | CoOOH, CeO₂ | 2284+2716 | 0.5 | Li₂SO₄ | Li | 2000 | S | 4600 | 2500 | 2000 | 1.25 | 0.15 | 3 | 1.4 | 1.90 |
| Example 26 | LiNi_{0.92}Co_{0.06}Mn_{0.018}Sb_{0.002}O₂ | Co+Ce | CoOOH, CeO₂ | 2284+2716 | 0.5 | Li₂SO₄ | Li | 2000 | S | 4600 | 3500 | 2500 | 1.4 | 0.15 | 3 | 1.4 | 1.90 |
| Example 27 | LiNi_{0.92}Co_{0.06}Mn_{0.018}Sb_{0.002}O₂ | Co+Ce | CoOOH, CeO₂ | 2284+2716 | 0.5 | Li₂SO₄ | Li | 2000 | S | 4600 | 1000 | 2000 | 0.5 | 0.15 | 3 | 1.4 | 1.90 |
| Example 28 | LiNi_{0.92}Co_{0.06}Mn_{0.018}Sb_{0.002}O₂ | Co+Ce | CoOOH, CeO₂ | 2284+2716 | 0.5 | Li₂SO₄ | Li | 2000 | S | 4600 | 1000 | 500 | 2 | 0.14 | 3 | 1.4 | 1.90 |
| Example 29 | LiNi_{0.92}Co_{0.06}Mn_{0.018}Sb_{0.002}O₂ | Co+Ce | CoOOH, CeO₂ | 2284+2716 | 0.5 | Li₂SO₄ | Li | 2000 | S | 4600 | 1000 | 1000 | 1 | 0.14 | 3 | 0.2 | 1.90 |
| Example 30 | LiNi_{0.92}Co_{0.06}Mn_{0.018}Sb_{0.002}O₂ | Co+Ce | CoOOH, CeO₂ | 2284+2716 | 0.5 | Li₂SO₄ | Li | 2000 | S | 4600 | 1000 | 1000 | 1 | 0.14 | 3 | 0.5 | 1.90 |
| Example 31 | LiNi_{0.92}Co_{0.06}Mn_{0.018}Sb_{0.002}O₂ | Co+Ce | CoOOH, CeO₂ | 2284+2716 | 0.5 | Li₂SO₄ | Li | 2000 | S | 4600 | 1000 | 1000 | 1 | 0.14 | 3 | 1.2 | 1.90 |
| Comparative example 1 | LiNi_{0.92}Co_{0.07}Mn_{0.01}O₂ | / | / | / | / | / | / | / | / | / | / | / | / | / | 1.1 | 1.4 | 1.62 |
| Comparative example 2 | LiNi_{0.92}Co_{0.06}Mn_{0.018}Sb_{0.002}O₂ | / | / | / | / | / | / | / | / | / | / | / | / | / | 1.1 | 1.4 | 1.65 |

**Table 2**

| | Positive electrode plate | Battery | | | | | |
|---|---|---|---|---|---|---|---|
| | Compaction density (g/cm³) | 1/3 C full electric gram capacity (mAh/g) | Coulombic efficiency | Direct current internal resistance (mΩ) | Capacity retention rate after for 300 cycles at 45°C | Rich retention rate after 60 days of storage at 60°C | Gas production rate in storage for 60 days at 70°C (mL/Ah) |
| Example 1 | 3.55 | 221.5 | 90.0% | 4400 | 92.0% | 95.0% | 6.1 |
| Example 2 | 3.55 | 220.1 | 89.7% | 4680 | 91.0% | 93.1% | 8.3 |
| Example 3 | 3.55 | 221.0 | 89.9% | 4520 | 91.8% | 94.3% | 6.5 |
| Example 4 | 3.55 | 219.6 | 90.0% | 4590 | 91.2% | 93.3% | 7.9 |
| Example 5 | 3.55 | 219.9 | 89.6% | 4560 | 91.7% | 93.9% | 7.0 |
| Example 6 | 3.55 | 219.8 | 89.4% | 4520 | 91.9% | 94.1% | 7.2 |
| Example 7 | 3.55 | 220.4 | 89.7% | 4580 | 91.7% | 93.7% | 7.1 |
| Example 8 | 3.55 | 221.3 | 89.9% | 4630 | 91.5% | 93.4% | 7.2 |
| Example 9 | 3.55 | 220.8 | 89.6% | 4600 | 91.9% | 94.2% | 6.7 |
| Example 10 | 3.55 | 221.1 | 89.5% | 4490 | 91.2% | 93.6% | 7.6 |
| Example 11 | 3.55 | 221.4 | 89.8% | 4470 | 91.5% | 93.9% | 7.2 |
| Example 12 | 3.55 | 220.7 | 89.5% | 4420 | 91.8% | 94.4% | 6.8 |
| Example 13 | 3.55 | 220.2 | 89.1% | 4560 | 91.6% | 94.5% | 6.6 |
| Example 14 | 3.55 | 220.6 | 89.6% | 4610 | 91.8% | 94.2% | 6.5 |
| Example 15 | 3.55 | 221.8 | 90.5% | 4350 | 91.9% | 94.0% | 6.6 |
| Example 16 | 3.55 | 223.0 | 91.2% | 4170 | 91.8% | 93.9% | 6.9 |
| Example 17 | 3.55 | 221.5 | 90.5% | 4510 | 91.6% | 93.7% | 7.3 |
| Example 18 | 3.55 | 220.0 | 89.4% | 4590 | 91.8% | 94.1% | 7.0 |
| Example 19 | 3.55 | 218.9 | 88.7% | 4810 | 92.0% | 94.6% | 6.3 |
| Example 20 | 3.55 | 218.2 | 88.5% | 4950 | 92.3% | 95.3% | 5.1 |
| Example 21 | 3.55 | 219.6 | 89.3% | 4570 | 91.8% | 94.6% | 6.0 |
| Example 22 | 3.55 | 220.3 | 90.1% | 4430 | 91.6% | 94.2% | 6.6 |
| Example 23 | 3.55 | 220.1 | 89.8% | 4510 | 91.6% | 94.2% | 7.2 |
| Example 24 | 3.55 | 220.6 | 90.1% | 4580 | 91.9% | 94.4% | 6.5 |
| Example 25 | 3.55 | 220.1 | 89.5% | 4680 | 92.6% | 95.3% | 5.3 |
| Example 26 | 3.55 | 219.5 | 88.9% | 4860 | 92.9% | 95.6% | 4.8 |
| Example 27 | 3.55 | 219.9 | 89.7% | 4530 | 92.1% | 94.7% | 6.4 |
| Example 28 | 3.55 | 220.5 | 89.8% | 4420 | 92.0% | 95.2% | 5.9 |
| Example 29 | 3.4 | 221.1 | 90.2% | 4410 | 92.1% | 95.1% | 6.1 |
| Example 30 | 3.45 | 221.0 | 90.3% | 4450 | 92.0% | 95.2% | 6.2 |
| Example 31 | 3.5 | 221.2 | 90.2% | 4440 | 91.9% | 95.0% | 6.1 |
| Comparative example 1 | 3.55 | 216.5 | 88.0% | 5230 | 88.5% | 90.3% | 14.2 |
| Comparative example 2 | 3.55 | 216.1 | 87.8% | 5190 | 89.1% | 90.9% | 12.9 |

It can be known according to the foregoing results that the composite positive electrode material in Examples 1 to 31 includes a positive electrode material substrate and a first coating layer at least partially covering the positive electrode material substrate. A formula of the positive electrode material substrate is LiNi_{0.92}Co_{0.06}Mn_{0.018}Sb_{0.002}O₂, LiNi_{0.92}Co_{0.07}Mn_{0.01}O₂, or LiNi_{0.92}Co_{0.06}Mn_{0.018}Zr_{0.002}O₂. The first coating layer includes a transition metal element Ce or Co.

In view of Examples 1 to 31 and Comparative examples 1 and 2, that a first coating layer including a transition metal element is covered on the positive electrode material substrate can reduce direct current internal resistance of a battery, increase a gram capacity and first coulombic efficiency of the battery, improve high-temperature storage performance and high-temperature cycle performance of the battery, reduce high-temperature gas production of the battery, and comprehensively improve electrochemical performance of the battery.

In view of Examples 1 to 31, the transition metal element is present in the first coating layer in a form of an oxide or a fluoride. The battery has low direct current internal resistance. The battery has an excellent gram capacity, excellent first coulombic efficiency, excellent high-temperature storage performance, and excellent high-temperature cycle performance. The battery has a small high-temperature gas production amount.

In view of comparison between Examples 5 and 4, the first coating layer further includes a compound Li₂SO₄ having a melting point lower than 900°Ca, which can increase a gram capacity of the battery, reduce direct current internal resistance of the battery, improve the high-temperature storage performance and the high-temperature cycle performance of the battery, and reduce high-temperature gas production of the battery.

In view of comparison between Examples 6 and 5, the composite positive electrode material further includes a second coating layer. The second coating layer is at least partially coated on a surface of the first coating layer, and the second coating layer includes Al or B, which can further reduce the direct current internal resistance of the battery, improve the high-temperature storage performance and the high-temperature cycle performance of the battery, and improve electrochemical performance of the battery at a high temperature.

In view of Examples 1 and 10 to 14, based on a mass of the positive electrode material substrate, a mass content of the transition metal element in the first coating layer ranges from 100 ppm to 20000 ppm. The battery has an excellent gram capacity, excellent first coulombic efficiency, excellent high-temperature storage performance, and excellent high-temperature cycle performance. The battery has a small high-temperature gas production amount.

In view of comparison between Examples 1 and 12 and Examples 10, 11, and 14, based on a mass of the positive electrode material substrate, a mass content of the transition metal element in the first coating layer ranges from 1000 ppm to 15000 ppm, so that direct current internal resistance of the battery can be reduced, and the high-temperature cycle performance of the battery can be improved.

In view of Examples 1, 14, and 16, the molar ratio M of Ce to Co in the transition metal element meets 0<M≤10. The battery has low direct current internal resistance. The battery has an excellent gram capacity, excellent first coulombic efficiency, excellent high-temperature storage performance, and excellent high-temperature cycle performance. The battery has a small high-temperature gas production amount.

In view of comparison between Examples 1, 14, and 15 and Example 16, that the molar ratio M of Ce to Co in the transition metal element meets 0<M≤1 can improve the high-temperature cycle performance and the high-temperature storage performance of the battery, reduce high-temperature gas production of the battery, and widen an operating temperature of the battery.

In view of Examples 17 to 20, based on the mass of the positive electrode material substrate, a mass content of the Li element in the first coating layer ranges from 100 ppm to 15000 ppm. The battery has low direct current internal resistance. The battery has an excellent gram capacity, excellent first coulombic efficiency, excellent high-temperature storage performance, and excellent high-temperature cycle performance. The battery has a small high-temperature gas production amount.

In view of comparison between Example 18 and Examples 17, 19, and 20, that based on the mass of the positive electrode material substrate, a mass content of the Li element in the first coating layer ranges from 1000 ppm to 8000 ppm can take all of the first coulombic efficiency, the high-temperature storage performance, the high-temperature storage performance, and the high-temperature gas production amount of the battery into account, to comprehensively improve the performance of the battery.

In view of Examples 17 to 20, based on the mass of the positive electrode material substrate, a mass content of the S element in the first coating layer ranges from 200 ppm to 50000 ppm. The battery has low direct current internal resistance. The battery has an excellent gram capacity, excellent first coulombic efficiency, excellent high-temperature storage performance, and excellent high-temperature cycle performance. The battery has a small high-temperature gas production amount.

In view of comparison between Examples 18 to 20 and Example 17, that based on the mass of the positive electrode material substrate, a mass content of the S element in the first coating layer ranges from 500 ppm to 8000 ppm can improve the high-temperature cycle performance and the high-temperature storage performance of the battery, reduce high-temperature gas production of the battery, and widen an operating temperature of the battery.

In view of Examples 1 and 23 to 28, based on the mass of the positive electrode material substrate, a mass content of Al in the second coating layer ranges from 100 ppm to 3500 ppm. The battery has low direct current internal resistance. The battery has an excellent gram capacity, excellent first coulombic efficiency, excellent high-temperature storage performance, and excellent high-temperature cycle performance. The battery has a small high-temperature gas production amount.

In view of comparison between Examples 1, 24, 25, 27, and 28 and Examples 23 and 26, that based on the mass of the positive electrode material substrate, a mass content of Al in the second coating layer ranges from 500 ppm to 2500 ppm can improve the gram capacity of the battery while taking all of the first coulombic efficiency, the high-temperature storage performance, the high-temperature storage performance, and the high-temperature gas production amount of the battery into account, to comprehensively improve the performance of the battery.

In view of Examples 1 and 23 to 26, based on the mass of the positive electrode material substrate, a mass content of B in the second coating layer ranges from 100 ppm to 2500 ppm. The battery has low direct current internal resistance. The battery has an excellent gram capacity, excellent first coulombic efficiency, excellent high-temperature storage performance, and excellent high-temperature cycle performance. The battery has a small high-temperature gas production amount.

In view of comparison between Examples 1, 24, 25, 27, and 28 and Examples 23 and 26, that based on the mass of the positive electrode material substrate, a mass content of B in the second coating layer ranges from 500 ppm to 2000 ppm can improve the gram capacity of the battery while taking all of the first coulombic efficiency, the high-temperature storage performance, the high-temperature storage performance, and the high-temperature gas production amount of the battery into account, to comprehensively improve the performance of the battery.

In view of Examples 1 and 23 to 28, a mass ratio of the Al element to the B element in the second coating layer ranges from 0.5 to 2. The battery has low direct current internal resistance. The battery has an excellent gram capacity, excellent first coulombic efficiency, excellent high-temperature storage performance, and excellent high-temperature cycle performance. The battery has a small high-temperature gas production amount.

In view of Examples 1 to 31, a total thickness of the first coating layer and the second coating layer ranges from 0.01 µm to 1 µm. The battery has low direct current internal resistance. The battery has an excellent gram capacity, excellent first coulombic efficiency, excellent high-temperature storage performance, and excellent high-temperature cycle performance. The battery has a small high-temperature gas production amount.

In view of Examples 1 to 31, an aspect ratio of primary particles of the composite positive electrode material ranges from 1.5 to 10. The battery has low direct current internal resistance. The battery has an excellent gram capacity, excellent first coulombic efficiency, excellent high-temperature storage performance, and excellent high-temperature cycle performance. The battery has a small high-temperature gas production amount.

In view of comparison between Examples 1, 14, and 15 and Example 16, that the aspect ratio of the primary particles of the composite positive electrode material ranges from 2 to 4 can improve the high-temperature cycle performance and the high-temperature storage performance of the battery, reduce high-temperature gas production of the battery, and widen an operating temperature of the battery.

In view of Examples 1, 30, and 31 and Example 29, that the span of the composite positive electrode material is greater than or equal 0.5 can increase a compaction density of an electrode plate.

In view of comparison between Examples 1 and 31 and Examples 29 and 30, that the span of the composite positive electrode material is greater than or equal 1.2 can further increase the compaction density of the electrode plate.

In view of Examples 1 to 31, an ODI of the composite positive electrode material is greater than or equal to 1.75. The battery has low direct current internal resistance. The battery has an excellent gram capacity, excellent first coulombic efficiency, excellent high-temperature storage performance, and excellent high-temperature cycle performance. The battery has a small high-temperature gas production amount.

In view of comparison between Examples 1, 10, and 11 and Examples 12 and 13, that the ODI of the composite positive electrode material is greater than or equal to 1.8 can further improve the high-temperature cycle performance and the high-temperature storage performance of the battery, reduce high-temperature gas production of the battery, and widen an operating temperature of the battery.

## Claims

1. A composite positive electrode material, comprising a positive electrode material substrate and a first coating layer at least partially covering the positive electrode material substrate, wherein a general formula of the positive electrode material substrate is:
Li_{b}NiₓCo_{y}Mn_{z}MₐO_{2-c},
wherein M comprises one or more of Zr, Y, Al, Ti, W, Sr, Ta, Mo, Sb, Nb, Na, K, and Ca, 0.55≤x≤1.0, 0≤y≤0.45, 0≤z≤0.45, 0≤a≤0.45, 0.5≤b≤1.2, a+x+y+z+b=2, and -0.1≤c≤0.1; and
the first coating layer comprises a transition metal element.

2. The composite positive electrode material according to claim 1, wherein in the general formula Li_{b}NiₓCo_{y}Mn_{z}MₐO_{2-c}, 0.9≤x≤1.0, 0≤y≤0.1, 0≤z≤0.1, 0≤a≤0.1, 0.5≤b≤1.2, a+x+y+z+b=2, and -0.1≤c≤0.1.

3. The composite positive electrode material according to claim 1 or 2, wherein the transition metal element is present in the first coating layer in a form of an oxide or a fluoride.

4. The composite positive electrode material according to any one of claims 1 to 3, wherein the transition metal element comprises one or more of Co, Ce, Zr, La, Sb, and W, and optionally, the transition metal element comprises one or both of Co and Ce.

5. The composite positive electrode material according to any one of claims 1 to 4, wherein the first coating layer further comprises a compound having a melting point lower than 900°C.

6. The composite positive electrode material according to claim 5, wherein the compound having a melting point lower than 900°C comprises an alkali metal element and a non-metal element, wherein the non-metal element comprises one or more of N, F, Cl, and S.

7. The composite positive electrode material according to any one of claims 1 to 6, wherein the composite positive electrode material further comprises a second coating layer, wherein the second coating layer at least partially covers the surface of the first coating layer, and the second coating layer comprises one or more of Al, B, and W.

8. The composite positive electrode material according to any one of claims 1 to 7, wherein based on a mass of the positive electrode material substrate, a mass content of the transition metal element in the first coating layer ranges from 100 ppm to 20000 ppm, and optionally, ranges from 1000 ppm to 15000 ppm.

9. The composite positive electrode material according to any one of claims 4 to 8, wherein a molar ratio M of Ce to Co in the transition metal element meets 0<M≤10, and optionally, meets 0<M≤1.

10. The composite positive electrode material according to any one of claims 6 to 9, wherein based on the mass of the positive electrode material substrate, a mass content of the alkali metal element in the first coating layer ranges from 100 ppm to 15000 ppm, and optionally, ranges from 1000 ppm to 8000 ppm.

11. The composite positive electrode material according to any one of claims 6 to 10, wherein based on the mass of the positive electrode material substrate, a mass content of the non-metal element in the first coating layer ranges from 200 ppm to 50000 ppm, and optionally, ranges from 500 ppm to 8000 ppm.

12. The composite positive electrode material according to any one of claims 7 to 11, wherein based on the mass of the positive electrode material substrate, a mass content of Al in the second coating layer ranges from 100 ppm to 3500 ppm, and optionally, ranges from 500 ppm to 2500 ppm.

13. The composite positive electrode material according to any one of claims 7 to 12, wherein based on the mass of the positive electrode material substrate, a mass content of B in the second coating layer ranges from 100 ppm to 2500 ppm, and optionally, ranges from 500 ppm to 2000 ppm.

14. The composite positive electrode material according to any one of claims 7 to 13, wherein a mass ratio of the element Al to the element B in the second coating layer ranges from 0.5 to 2.

15. The composite positive electrode material according to any one of claims 7 to 14, wherein a total thickness of the first coating layer and the second coating layer ranges from 0.01 µm to 1 µm.

16. The composite positive electrode material according to any one of claims 1 to 15, wherein an aspect ratio of primary particles of the composite positive electrode material ranges from 1.5 to 10, and optionally, ranges from 2 to 4.

17. The composite positive electrode material according to any one of claims 1 to 16, wherein a span of the composite positive electrode material is greater than or equal to 0.5, and optionally, is greater than or equal to 1.2.

18. The composite positive electrode material according to any one of claims 1 to 17, wherein an oxygen defect index (ODI) of the composite positive electrode material is greater than or equal to 1.75, and optionally, is greater than or equal to 1.8.

19. A preparation method for a composite positive electrode material, comprising: step (1) and step (2), wherein
step (1) is uniformly mixing a first raw material comprising a lithium source and a positive electrode material precursor, and performing a first calcination in a first atmosphere to obtain a first product, wherein optionally, the first raw material further comprises an M source; and
step (2) is mixing the first product and a second raw material comprising a transition metal element source in a second atmosphere to perform a second calcination, to prepare the composite positive electrode material, wherein
the composite positive electrode material comprises a positive electrode material substrate and a first coating layer arranged on at least a part of the positive electrode material substrate, wherein a general formula of the positive electrode material substrate is:
Li_{b}NiₓCo_{y}Mn_{z}MₐO_{2-c},
wherein M comprises one or more of Zr, Y, Al, Ti, W, Sr, Ta, Mo, Sb, Nb, Na, K, and Ca, 0.55≤x≤1.0, 0≤y≤0.45, 0≤z≤0.45, 0≤a≤0.45, 0.5≤b≤1.2, a+x+y+z+b=2, and -0.1≤c≤0.1; and
the first coating layer comprises a transition metal element.

20. The preparation method according to claim 19, wherein the transition metal element comprises one or more of Ce, Co, Zr, La, Sb, and W.

21. The preparation method according to claim 19 or 20, wherein the second raw material further comprises a compound having a melting point lower than 900°C.

22. The preparation method according to any one of claims 19 to 21, wherein step (2) specifically comprises:
mixing the first product and the second raw material in the second atmosphere uniformly, and performing the second calcination, to obtain a second product; and
mixing the second product and a third raw material uniformly, and performing a third calcination in a third atmosphere, to prepare the composite positive electrode material, wherein the third raw material comprises one or more of an Al source, a B source, and a W source.

23. The preparation method according to any one of claims 19 to 22, wherein the first atmosphere is an air atmosphere or a pure oxygen atmosphere, a calcination temperature of the first calcination ranges from 700°C to 900°C, and a calcination time ranges from 10 h to 20 h.

24. The preparation method according to any one of claims 19 to 23, wherein the second atmosphere is a pure oxygen atmosphere or an air atmosphere, a calcination temperature of the second calcination ranges from 300°C to 650°C, and a calcination time ranges from 3 h to 10 h.

25. The preparation method according to any one of claims 22 to 24, wherein the third atmosphere is an air atmosphere or a pure oxygen atmosphere, a calcination temperature of the third calcination ranges from 200°C to 500°C, and a calcination time ranges from 5 h to 15 h.

26. A positive electrode plate, comprising the composite positive electrode material according to any one of claims 1 to 18 or the composite positive electrode material prepared by using the preparation method according to any one of claims 19 to 25.

27. A secondary battery, comprising the positive electrode plate according to claim 26.

28. An electric device, comprising the secondary battery according to claim 27.
